# EUROPEAN PATENT SPECIFICATION

(11) **EP 4 630 208 B1**
(45) Date of publication and mention of the grant of the patent: **04.11.2026**
(21) Application number: 22834851.2
(22) Date of filing: 05.12.2022
(51) Int. Cl.: B25J 9/16, B25J 5/00, B25J 19/00, B25J 19/02, B62D 57/028, G05B 19/00, G05D 1/20, B25J 13/08, B25J 11/00, B25J 13/00

(54) **HUMANOID ROBOT COMPRISING ARTICULATED LEGS WITH WHEELS OR TRACKS**
HUMANOIDER ROBOTER MIT GELENKIGEN BEINEN MIT RÄDERN ODER SCHIENEN
ROBOT HUMANOÏDE COMPRENANT DES PIEDS ARTICULÉS POURVUS DE ROUES OU DE CHENILLES

(43) Date of publication of application: 15.10.2025
(60) Divisional application: 25227559.9 / 4 696 466; 25227563.1 / 4 696 467; 25227568.0 / 4 696 468
(73) Proprietor: Hexagon Robotics GmbH, 8045 Zürich (CH)
(72) Inventor: GOHL, Pascal, 8400 Winterthur (CH); HEINZLE, Lukas, 8820 Wädenswil (CH); STEFFEN, Roman, 9445 Rebstein (CH); WIESER, Matthias, 73240 Wendlingen (DE); BÖCKEM, Burkhard, 8916 Jonen AG (CH); KHANENYA, Nikolay, 9000 St.Gallen (CH); ISELI, Claudio, 9434 Au (CH); WENK, Markus, 7000 Chur (CH)
(74) Representative: Kaminski Harmann
(86) International application number: PCT/EP2022/084481
(87) International publication number: WO 2024/120607

(56) References cited:
- EP-A2- 1 207 099
- JP-A- 2003 346 150
- JP-A- 2016 155 216
- US-A1- 2003 009 259
- US-A1- 2005 067 993
- US-A1- 2017 106 738
- US-B1- 7 348 747

## Description

The invention relates generally to a mobile robot configured to provide reality capture and metrology grade geometric measurement, e.g. to generally support infrastructure surveillance and/or to support workflows in the field of metrology.

Reality capture is of interest for monitoring an environment, e.g. to safeguard restricted or dangerous areas such as industrial plants, construction sites, or business complexes. In addition, operation of a facility may be supported by providing quick assessment of an actual state of the environment and using the assessment to provide automated interaction with object in the environment.

Reality capture makes use of a combination of a variety of different perception sensing techniques such as optical and thermal imaging, depth-measuring, three-dimensional laser scanning, acoustic sensing, vibration measuring, etc. The referencing and fusion of different data types, e.g. laser scanner data, camera data, and positioning data such as from a global navigation satellite system, is now increasingly standardized.

Reality capture may be provided by a mobile robot configured to move through the environment and to provide perception data and referencing data at the same time, e.g. wherein at least trajectory data of the robot are provided with the acquisition of the perception data, such that perception data acquired at different positions can be combined into a common coordinate system. Often, such mobile robots are configured to autonomously create a 3D map of a new environment, e.g. by means of a simultaneous localization and mapping (SLAM) functionality.

By way of example, the perception data are analyzed by means of a feature recognition algorithm configured to automatically recognize semantic and/or geometric features captured by the perception data, e.g. by using shape information provided by virtual object data from a CAD model. Such feature recognition, particularly for recognizing geometric primitives, are nowadays widely used.

In metrology, it is a general object to determine geometrical properties such as coordinates, distances, and orientations of one or more target objects. Methods and systems for measuring geometric properties are used in many applications, e.g. very precise measurements in geodesic applications, measurement problems in the field of building installation, or for controlling or aiding industrial processes.

Metrology applications typically demand measurement accuracies that supersede accuracies provided by reality capture devices by orders of magnitude. Often, measurement devices in the field of metrology are heavy and need to be referenced or installed to a fixed position with high precision in order to provide coordinate measurement data with an accuracy better than the millimeter range, often better than the micrometer range. For example, typical metrology measurement devices are laser scanners, structured light scanners, coordinate measuring machines (CMM), and articulated measurement arms,

Often, limited measurement accuracy (e.g. compared to metrology devices) is not an issue when using a mobile robot for surveillance purposes. For example, point density and distance measurement accuracy of a 3D laser scanner has to be sufficient to be able to recognize a left-behind object but there is no need to be able to recognize objects or deformations within the environment at the millimeter or even micrometer range. However, there are applications where limited measurement accuracies/capabilities of generic mobile surveillance robots cause problems. For example, generic surveillance robots still have problems in recognizing partially open windows and doors.

On the other hand, it would be beneficial to have the mobility and increased flexibility provided by mobile reality capture robots also in the field of metrology, which, for example, would reduce space required for the bulky and heavy metrology devices, increase flexibility in measuring different types of objects, and provide more efficient industrial processes. However, the structure of a mobile robot, e.g. including a lot of moveable parts and joints, introduces additional degrees of freedom, which make providing precise measuring more difficult. In addition, the mobility can lead to additional mechanical load on the sensitive metrology sensors, which must be taken into account.

US7348747 discloses a legged humanoid-type robot comprising batteries in each thigh. EP1207099 discloses a legged humanoid-type robot configured to replace by itself the battery present in its torso.

It is therefore an object of the present invention to provide a mobile robot, which overcomes deficiencies of prior art robots in the field of reality capture, particularly in the field of infrastructure surveillance.

The invention relates to a humanoid robot. The robot comprises a main body, two mechanically actuated legs attached to the main body at a lower part of the main body and configured to provide locomotion of the robot over ground, two mechanically actuated arms attached to the main body at an upper part of the main body and configured to move relative to the main body and a, e.g. mechanically actuated, head attached to the main body at the top of the main body.

Each of the two mechanically actuated legs is attached to the main body by a hip joint providing movement of an upper part of the leg relative to the main body. Each of the legs further comprises a knee joint providing movement of a lower part of the leg relative to the upper part of the leg, and a wheel at a distal end away from the knee joint for contacting the ground in order to provide the locomotion.

The robot is configured to provide the locomotion in a walking mode by stepped motion of the legs and in a driving mode by rolling on the wheels.

One of the two legs comprises a battery compartment arranged between the knee joint and the hip joint and configured to accommodate a swappable battery. The battery - when accommodated in the battery compartment - provides electrical energy to be used for driving a motion of the robot, e.g. a motion of one the two legs (e.g. including motion of the wheels) and/or one of the two arms. In particular, the robot is configured to autonomously perform a task involving movement of a robot part and is configured that the swappable battery provides a substantial part, in particular all, of the electrical energy consumed by the robot during the performance of said task. The robot is configured to provide for a battery replacement for the battery compartment during continuous operation of the robot, e.g. during motion by the two arms.

The robot comprises a further battery compartment arranged between the knee joint and the hip joint of the other of the two legs, i.e. each of the two legs comprises a battery compartment. The further battery compartment is configured to accommodate a further swappable battery. The further battery - when accommodated in the further battery compartment - provides electrical energy to be used for a motion of the robot, in particular a motion of one of the two legs (e.g. a motion by the leg itself and/or a motion of the wheel) and/or one of the two arms. Each of the battery compartments comprises a circuit breaker configured to be activated for battery replacement for the respective battery compartment and to provide electrical disconnecting of a battery located in the respective battery compartment so that the robot is still supplied with electric energy from the other battery compartment.

In a further embodiment, the humanoid robot is configured to use one of the arms to autonomously remove a battery located in the battery compartment and to autonomously place a battery into the battery compartment, particularly wherein the battery compartment comprises a quick release mechanism configured to be activated by the robot.

In a further embodiment, each of the hip joints provides movement in two rotational degrees of freedom relative to the main body and each of the knee joints provides movement in one rotational degree of freedom (e.g. to provide a folding movement for the leg).

In a further embodiment, each of the knee joints is driven by a respective electric motor located away from the knee joint and each of the legs comprises a mechanical transmission element driven by the respective electric motor, e.g. a belt or a chain, to provide mechanical actuation of the movement about the respective knee joint.

In a further embodiment, each of the arms is attached to the main body by a shoulder joint. The shoulder joint provides movement in one rotational degree of freedom, particularly two rotational degrees of freedom, relative to the main body. The arms further comprise an elbow joint and a hand joint arrangement. The elbow joint provides movement in one rotational degree of freedom, in particular for folding the arm.

In a further embodiment, the hand joint arrangement is configured for performing a gripping operation.

By way of example, the robot comprises further joints, e.g. a further joint arranged on the arm to provide a rotational degree of freedom of the arm around an arm axis. For example, the further joint is arranged between an elbow joint and the shoulder joint or between the elbow joint and the hand joint. For example, the arm axis is coaxial with an imaginary line intersecting the elbow joint and the hand joint or with an imaginary line intersecting the shoulder joint and the elbow joint.

In a further embodiment, each of the shoulder joints, the elbow joints, and the hand joints comprises a robotic drive module for driving rotary joint movement. The robotic drive module comprises a rotary drive comprising a motor circuit board, a stator, and a rotor. The rotor is configured to rotate - controlled by the motor circuit board - relative to the stator about an axis of rotation. The robotic drive module further comprises a gearbox configured to transform - according to a defined gear ratio - a rotary motion of the rotor about the axis of rotation into a rotary motion of a gearbox output component about the axis of rotation. The motor circuit board and the stator are arranged axially with respect to the axis of rotation on one side of the gearbox, denoted gearbox input side. The gearbox output component engages the gearbox from the other side of the gearbox, denoted gearbox output side. The robotic drive module further comprises a connecting part which extends from the gearbox output side to the gearbox input side and is configured to pick up the rotation of the gearbox output component in a rigid manner, thereby providing rotation of the connecting part conforming, e.g. being identical, to the rotation of the gearbox output component. The robotic drive module further comprises a rotary encoder configured to detect a rotation of the gearbox output component about the axis of rotation. The rotary encoder is arranged on the gearbox input side and configured to provide for measuring a rotation of the connecting part about the axis of rotation.

In a further embodiment, at least one of the arms, in particular at a distal end away from an attachment point of the arm, comprises a probing sensor arrangement, particularly comprising an optical sensor configured to provide optical sensor data and/or a tactile sensor configured to provide tactile scanning data. Optical in the sense of the present invention comprises the whole electromagnetic spectrum, e.g. from the ultraviolet to the infrared wavelength range and also beyond that range. By way of example, an optical sensor in the sense of the present invention is embodied as an imaging sensor, e.g. a 2D or 3D imaging camera, or a laser based scanning sensor, e.g. a scanning sensor for detecting reflected light from a cooperative target and/or for detecting diffusively scattering light. In particular, probing sensor in the sense of the present invention relates to a sensor configured to provide a coordinate measurement by approaching an object to be measured and determining a relative distance and/or a relative orientation of the sensor to the measured object surface. For example, the relative distance and thus the coordinate for a measurement point is probed by a single-point measurement. Alternatively, the probing sensor is moved over the surface to be measured and provides continuous sensor data to evaluate the relative distance to the object surface along the trajectory of the sensor movement. In particular, a probing sensor in the sense of the present invention is embodied as metrology grade sensor, e.g. a sensor with submillimeter distance resolution.

In a further embodiment the robot comprises a scanning lidar unit configured to provide - during movement of the robot over ground - a scanning movement of a laser measurement beam relative to two rotation axes, and, based thereof, to generate light detection and ranging data for generating a three-dimensional point cloud. The lidar unit is preferably located in an upper part of the robot, in particular in the main body and/or in the head.

In a further embodiment, the robot comprises a ToF unit. The ToF unit comprises an arrangement of time-of-flight sensors and is configured to provide - during movement of the robot over ground - 3D imaging data of the environment for generating a 3D model of the environment. The ToF unit is preferably located in the upper part of the robot, in particular in the main body and/or in the head.

For example, the head comprises a top side opposite an attachment point of the head to the main body, a front side adjacent to the top side and a back side opposite the front side and being adjacent to the top side, and two opposite transverse sides respectively adjacent to the top side and the front and back sides.

In a further embodiment, each of the transverse sides comprises an imaging camera such that the two imaging cameras are arranged opposite each other and provide opposite field-of-views, particularly wherein each of the two cameras provide a fully spherical 360° field-of-view

In a further embodiment, one of the two rotation axes of the lidar unit runs through the front side and the back side of the head and the lidar unit is configured to provide - with the front side facing in the direction of travel during forward locomotion - a forward-looking field of view around the one of the two rotation axes.

In a further embodiment, the ToF unit is configured to provide - with the front side facing in the direction of travel during locomotion - a forward-looking field of view.

In a further embodiment, the main body and/or the head comprises a structured light scanner configured to provide - during movement of the robot over ground - a 3D scanning of the environment for generating a 3D model of the environment.

In a further embodiment, the robot comprises a simultaneous localization and mapping unit, SLAM unit. The SLAM unit configured to carry out a simultaneous localization and mapping process, (SLAM process). The SLAM process comprising reception of perception data providing a representation of the surroundings of the robot at a current position, use of the perception data to generate a map of an environment, and localization of the robot within the map of the environment.

In a further embodiment, the robot is further configured to a.) access information regarding locations of charging and/or battery replacement stations within the map of the environment, in particular information regarding availability of charging positions and/or replacement batteries in each of the stations; b.) localize itself with respect to a location of at least one charging and/or battery replacement station within the map of the environment and provide an assessment regarding the reachability of the at least one charging and/or battery replacement station based on a charge state of the swappable batteries; and c.) trigger movement to the at least one charging and/or battery replacement station on the basis of the reachability of the station, in particular wherein the reachability is lower than a range threshold.

In a further embodiment, the robot comprises a charging element, in particular a wired connector. The charging element is configured to provide electrical energy during the battery replacement, e.g. wherein the robot is configured to autonomously connect the charging element to a charging position during the battery replacement.

In a further embodiment, the robot comprises a backup battery configured to provide electrical energy during the battery replacement. The backup battery might be a further battery in the battery compartment not replaced during the battery replacement, e.g. for embodiments wherein each of the legs comprises a swappable battery. The backup battery might also be a further battery configured emergency supply during the battery replacement.

In a further embodiment, each of the legs comprises a plurality of wheels for contacting the ground in order to provide the locomotion.

In a further embodiment, each of the legs comprises a tri-wheel arrangement. The tri-wheel arrangement comprises a.) three wheels attached to a wheel frame configured to support the three wheels in a circular pattern; b.) a main axis (linking the wheel frame to the remainder of the leg) providing a rotational degree of freedom of the wheel frame; and c.) three wheel axes which are different from the main axis, wherein the wheel axes link the wheels to the wheel frame, wherein each of the wheel axes provides a wheel rotational degree of freedom independently from the rotational degree of freedom of the main axis and from the wheel rotational degrees of freedom of the other two wheel axes.

In a further embodiment, the robot is configured to provide self-balancing movement control for movement of the arms during locomotion. The self-balancing movement supports the robot being balanced in a defined upright position. The robot comprises an inertial sensor, particularly a tilt sensor, and a gyroscopic sensor and a control algorithm configured to automatically adjust the relative pose of the two mechanically actuated arms based on the inertial sensor and the gyroscopic sensor to perform the self-balancing movement.

The mobile robot and system according to the different aspects of the invention are described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,

- Fig. 1:: an exemplary embodiment of a humanoid robot according to the invention;
- Fig. 2:: a further exemplary embodiment of a humanoid robot according to the invention, wherein the robot comprises a track drive to be used in a stand-up mode and a full track mode;
- Fig. 3:: several exemplary embodiments of wheel arrangements as they could be implemented in a robot according to the invention;
- Fig. 4:: an exemplary embodiment of a mechanically actuated leg as it can be used in a robot according to the invention, wherein the leg comprises two drive shafts and a transmission element such that one of the drive shafts provides a mechanical actuation of the other drive shaft via the mechanical actuation element;
- Fig. 5:: relates to an exemplary application of a robot according to the invention for monitoring an environment;
- Fig. 6:: a further exemplary embodiment of a humanoid robot according to the invention, wherein the robot is configured to perform a coordinate measurement of a measurement object by tactile probing;
- Fig. 7:: a further exemplary embodiment of a humanoid robot according to the invention, wherein the robot is configured to perform a coordinate measurement of a measurement object by optical probing;
- Fig. 8:: a further exemplary embodiment of a humanoid robot according to the invention, wherein the robot comprises a coupling interface configured to provide releasable rigid docking to a measurement platform;
- Fig. 9:: an exemplary application of a robot according to the invention in a factory environment with a plurality of machines, wherein the robot is configured to use sound data to single out a noise from a machine to monitor a wear state of the machine;
- Fig. 10:: the robot of Fig. 9, wherein the robot has approached a machine to carry out a vibration measurement for determining a wear state of the machine;
- Fig. 11:: a further exemplary embodiment of a humanoid robot according to the invention, wherein the robot comprises a power cable compatible with a power outlet of the environment and is configured to autonomously find the power outlet and attach the power cable to the power outlet;
- Fig. 12:: a further exemplary embodiment of a humanoid robot according to the invention, wherein the robot comprises a power cable and is configured to autonomously connect the power cable to another robot;
- Fig. 13:: an exemplary embodiment of a robotic drive module as it can be used in a robot according to the invention;
- Fig. 14:: depicts an exemplary embodiment of a dual-axis drive motor as it can be used in a robot according to the invention.

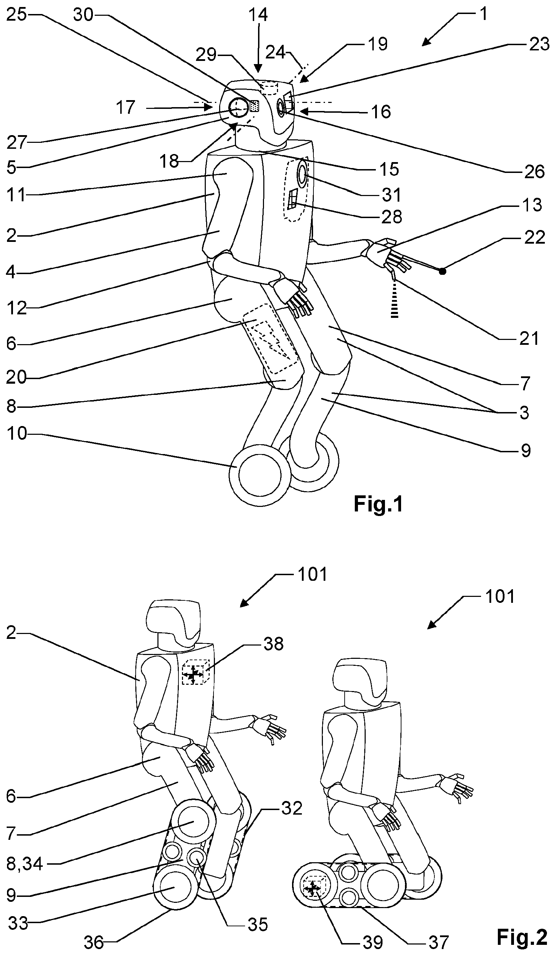

**Figure 1** shows an exemplary embodiment of a humanoid robot 1 according to the invention. The robot 1 comprises a main body 2, two mechanically actuated legs 3, two mechanically actuated arms 4, and a head 5, e.g. wherein also the head is mechanically actuated to be moveable relative to the main body 2.

The two legs 3 are attached to the main body 2 at a lower part of the main body and configured to provide locomotion of the robot 1 over ground. Each of the legs 3 is attached to the main body 2 by a hip joint 6 providing movement of an upper part 7 of the leg relative to the main body 2. Each of the legs 3 further comprises a knee joint 8 providing movement of a lower part 9 of the leg relative to the upper part 7 of the leg and a wheel 10 at a distal end away from the knee joint 8 for contacting the ground in order to provide the locomotion. For example, each of the hip joints 6 provides movement in two rotational degrees of freedom relative to the main body 2 and each of the knee joints 8 provides movement in one rotational degree of freedom, e.g. to provide a folding movement for the leg 3.

The two arms 4 are attached to the main body 2 at an upper part of the main body 2 and configured to move relative to the main body 2. Each of the two arms 4 is attached to the main body 2 by a shoulder joint 11, e.g. wherein the shoulder joint 11 provides movement in two rotational degrees of freedom relative to the main body. In the example shown, each of the two arms 4 further comprises an elbow joint 12 and a hand joint arrangement 13. Each of the elbow joints 12 provides movement in one rotational degree of freedom, e.g. for providing an arm folding movement. The hand joint arrangement 13 is configured to provide for performing a gripping operation. By way of example, the hand joint arrangement is configured to provide a hand embodied like a human hand. Alternatively, the hand joint arrangement provides for a simpler gripping tool like a two or three fingered claw.

The head 5 comprises a top side 14 opposite an attachment point 15 of the head 5 to the main body 2, a front side 16 adjacent to the top side 14 and a back side 17 opposite the front side 16 and being adjacent to the top side 14, and two opposite transverse sides 18, 19 respectively adjacent to the top side 14 and the front and back sides 16, 17. In other words, assuming a nominal head position of the robot during forward movement over a horizontal ground, the top side 14 faces to the sky, the front side 16 (also referred to as "face" of the robot) faces in the direction of travel, the back side 17 faces backwards, and the two transverse sides 18, 19, face in a horizontal direction perpendicular to the direction of travel.

The robot 1 is configured to provide the locomotion in a walking mode by stepped motion of the legs 3 and in a driving mode by rolling on the wheels 10. The driving mode is also referred to as so-called "Segway" mode, wherein the robot 1 is configured to provide self-balancing movement control of the wheels 10 to keep the robot in a defined upright position, e.g. by the help of a control algorithm making use of inertial sensors and gyroscopic sensors to automatically provide motor adjustments to maintain the upright position.

For example, the robot is further configured to provide the self-balancing movement by the aid of an automatic movement control for movement of the arms during locomotion so that movements by the arms 4 support the robot being balanced in the defined upright position. By way of example, the robot comprises a control algorithm configured to automatically adjust the relative pose of the two mechanically actuated arms based on the tilt sensors and the gyroscopic sensors so that the weight and orientation of the arms 4 provide a stabilizing effect to maintain the upright position of the robot 1.

The robot may be configured to choose the appropriate driving mode on its own, e.g. based on an analysis of the ground and/or the environment. By way of example, the stepped motion provides movement over uneven terrain or for walking on stairs. The driving mode may further be configured to provide a curve movement wherein the robot "leans" into a curve by shortening one of the legs, e.g. to allow for taking curves with faster speed and/or for reducing the curve radius.

The robot 1 may be configured to provide a storage configuration by folding the arms 4 and legs 3, wherein in the storage configuration a sum of a height, width and length and/or the volume of an enveloping cuboid of the humanoid robot 1 is reduced. For example, the robot 1 is configured to assume the storage configuration without assistance by using a defined control sequence of motors driving the robot joints.

Although some aspects described herein have been explained with reference to a simpler type of mobile robot, it goes without saying that these aspects can also be implemented on the basis of a humanoid robot 1 as described above.

In the embodiment shown in the figure, the robot 1 further comprises a variety of different sensor types and a specific embodiment of an power supply using swappable batteries as described below with reference to Fig. 1. Different embodiments of a humanoid robot according to the invention can comprise a different combination of these sensor types (e.g. wherein only one of these sensor types is used) and a different power supply, respectively.

Here, one of the two legs 3 comprises a battery compartment 20 arranged between the knee joint 8 and the hip joint 6. The battery compartment 20 is configured to accommodate a swappable battery such that the battery - when accommodated in the battery compartment 20 - provides electrical energy to be used for driving motion by the two legs 3 and the two arms 4. The robot 1 is configured to provide for a battery replacement for the battery compartment 20 during continuous operation of the robot, e.g. during motion by the two arms 4.

In particular, the robot 1 comprises in each leg such a battery compartment 20, i.e. both being arranged between the respective knee and hip joints. Each of the battery compartments is configured to accommodate a battery, which provides electrical energy to be used for driving motion by the two legs and the two arms. Each of the battery compartments comprises a circuit breaker configured to be activated for battery replacement for the respective battery compartment and to provide electrical disconnecting of a battery located in the respective battery compartment so that the robot is still supplied with electric energy from the other battery compartment. For example, the robot 1 is configured to autonomously swap a battery of one of the battery compartments, e.g. by using one of the arms 4. Autonomous swapping of a battery by the robot may be aided by a quick release functionality provided by the battery compartment 20, e.g. wherein the quick release is activated by an operation of the arm or a hand of the robot and/or wherein the quick release is activated by an electronic signal provided by the robot 1.

One of the arms 4 comprises an optical sensor 21 configured to provide optical sensor data, e.g. visual data by a camera or laser-based data by a lidar unit. The hand joint arrangement 13 is configured to provide a human-like hand with five fingers and the optical sensor 21 is arranged at a finger tip of one of the five fingers. For example, the robot 1 is configured to use the optical data for optical probing of a surface to be measured. Alternatively or in addition, the robot 1 is configured to use the optical sensor data to aid a gripping operation by the hand.

The robot 1 further comprises a tactile sensor 22 arranged at one of the other fingers. For example, the tactile sensor 22 comprises a ruby sphere and the mobile robot is configured to provide tactile scanning data by providing a distal endpoint coordinate of the tactile sensor 22.

The head 5 comprises a scanning lidar unit 23 configured to provide - during movement of the robot over ground - a scanning movement of a laser measurement beam relative to two rotation axes 24, 25. For example, one of the two rotation axes 25 of the lidar unit 23 runs through the front side 16 and the back side 17 and the lidar unit 23 is configured to provide a forward-looking field of view around the one of the two rotation axes 25 and, based thereof, to generate light detection and ranging data for generating a three-dimensional point cloud.

Here, the head 5 also comprises a ToF unit 26 comprising an arrangement of time-of-flight sensors and being configured to provide - during movement of the robot over ground - 3D imaging data of the environment for generating a 3D model of the environment. In the embodiment shown, the ToF unit 26 is arranged at the front side 16 and provides a forward-looking field of view.

The head 5 further comprises two imaging cameras 27, namely one camera arranged on each of the transverse sides 18, 19. The cameras 27 are arranged opposite each other and provide opposite "sideways-looking" field-of-views. For example, each camera 27 is a color camera, e.g. an RGB camera, configured to provide a fully spherical 360° field-of-view. The cameras 27 may also be embodied as so-called RIM (range imaging) or ToF (time-of-flight) cameras.

The main body 2 comprises a structured light scanner 28, e.g. arranged in a chest area in an upper area of the main body 2 and configured to provide a forward-looking field-of-view. By way of example, the structured light scanner 28 is used for 3D scanning of the environment during movement of the robot 1 over ground and/or for 3D scanning of a specific object in the environment, e.g. for which the robot is placed in front of a particular object to be measured with the chest facing to the object. For example, for such object scanning the robot 1 may assume one or a plurality of positions around the object (always with the chest facing to the object) to provide an all-around scan of the object.

The robot 1 can comprise further sensor types, e.g. a positioning unit 29, e.g. to provide location and/or navigation, a communication unit (not shown), a microphone unit 30, a communication unit (not shown), an inertial measurement unit (not shown), and a thermal imaging unit 31 unit. By way of example, the positioning unit 29 is embodied as a GNSS-based or WLAN-based positioning unit arranged the head 5, the microphone unit 30 is also arranged in the head 5, and the thermal imaging unit 31 is arranged in the chest area of the main body 2.

By way of example, the robot 1 further comprises a simultaneous localization and mapping (SLAM) unit configured to carry out a simultaneous localization and mapping process based on perception data provided by one of the above-mentioned sensors. For example, the SLAM process is based on visual data provided by the cameras 27 in the head 5 and/or on lidar data provided by the lidar unit 23 in the head 5.

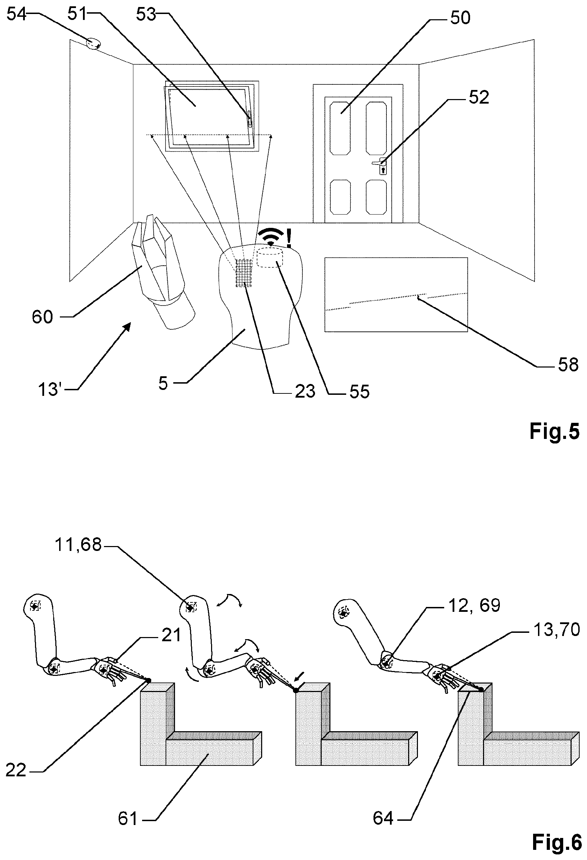

By way of example, a robot according to the invention, e.g. a humanoid robot 1 as described above, can be configured for hidden feature inspection because it can essentially freely move at any time and to any location where inspection is needed. Using local inspection sensors (e.g. probing sensors and camera/laser based tracking sensors as indicated in Figs. 6 to 8), precise inspection is possible from all sides of the object to be measured. The robot can reach geometrical features to be inspected which cannot be reached traditionally without relocating a measuring machine relative to the object to be measured, which is usually quite cumbersome. The robot can easily move to the back side of a part to be inspected, or even inside the part to be inspected (at least partially), and thus provides more flexibility and autonomy to inspect parts. In particular, the robot is particularly well suited to inspect large-scale parts.

For example, measurements by a local sensor at the hand (e.g. see Figs. 6 to 8) are combined with an accurate robot-based position of the hand / of the local sensor. By determining a position of the robot within an inertial system, e.g. by using etalon tracers or by measuring relative to the robot with one hand and reference to the other hand, large parts such as wind turbines, blades, power plants, parts of ships, air planes, trains, etc. can be inspected with flexibility. By way of example, a large part is inspected during assembly where some local features of the need to be inspected precisely and related to an outer inertial system with a certain accuracy, e.g. fitting a wing on an airplane. The robot can move to the location where the interfaces to fit the parts are located, inspect them with the local sensor, and get a precise relation between the features on both sides of the interfaces by keeping one hand on the one feature (for reference) and move the other hand on the other feature to be inspected and/or by tracking global position of the robot and using the local sensor on the hand for inspection at the same time.

**Figure 2** depicts a further exemplary humanoid robot 101 according to the invention, here with an alternative embodiment to provide locomotion of the robot 101. The legs 3 are attached to the main body 2 by the hip joints 6. Each of the legs 3 comprises an upper part 7, in particular an upper part 7 comprising a battery compartment (not shown, see Fig. 1), and a lower part 9 connected to each other by the knee joint 8, wherein the knee joint 8 provides a swiveling movement of the lower part 9 relative to the upper part 7. The lower part 9 comprises a track 32 running over a lower pulley 33 and an upper pulley 34. The lower pulley 33 is arranged on the distal end away from the knee joint 8. The upper pulley 34 is arranged closer to the knee joint 8, e.g. wherein its suspension arrangement might comprise elements of the knee joint 8. By way of example, as shown in the figure, the complete lower part 9 is embodied as the track 32.

The lower part 9 of the leg (the track 32) further comprises one or more support pulleys 35 arranged between the lower pulley 33 and the upper pulley 34 such that the one or more support pulleys 35 is/are in contact with the track 32. For example, the upper pulley 34 is a driven pulley, wherein the upper pulley 34 is driven by utilizing components arranged in the knee joint 8 and/or in the upper part 7 of the leg. The lower pulley 33 might be a driven pulley too, e.g. wherein separate motors drive the upper pulley 34 and the lower pulley 33, respectively. For example, a driven pulley comprises an electric motor integrated into or onto the pulley.

The left of the figure depicts the robot 101 in a so-called "stand-up mode", while on the right the robot 101 is depicted in a so-called "full track mode".

In the stand-up mode, a surface contact face of the running surface has smaller area size than a surface contact face of the running surface provided by the full track mode. In the example, shown, the robot 101 supports itself by standing on a curved part of the track 36 which is curved by the circumferential area of the lower pulley 33, wherein the locomotion is provided by a self-balancing locomotion (over the lower pulley 33). By way of example, the robot comprises an inertial sensor unit 38 in the main body 2, e.g. tilt sensors and gyroscopic sensors, and a control algorithm configured to automatically control movement of the lower pulleys 33 based on the sensors readings such that the robot is balanced in a defined upright position.

For example, in the full track-mode the robot 101 supports itself by standing on the largest possible surface contact face provided by the track 37 and the locomotion is provided by track locomotion. The track drive might comprise a further inertial sensor 39, e.g. an accelerometer. For example, the further inertial sensor 39 in the track drive provides wheelspin, track slippage, or shock information.

In a further embodiment, the robot is configured to provide during locomotion a raising of the upper pulleys relative to the lower pulleys to provide selection between two different running surface contact faces, wherein the two contact faces differ from each other by their respective area size. In other words, the robot is configured to provide different "feet sizes" by raising the upper pulleys to different heights above ground and being able to maintain different raised positions during locomotion. For example, the robot is configured to vary running surface contact faces (vary area sizes) either actively or passively, e.g. by comprising and using additional "displaceable pulleys" (at least one per track drive) and a spring pre-forcing to get a pre-forced track. By way of example, the robot can adapt the "feet size" depending on the task of the robot, e.g. adapt the raised position and use a small feet size when standing on position and keeping position is important but use a flatter (larger feet size) for walking up a steep and difficult terrain.

The passive variant could be as well designed with a spring/damper and then this can be as well designed semi-active (changing the spring-constant or damping properties depending on the tasks of robot).

In one embodiment, the robot 101 uses an optical sensor arrangement, e.g. a stereo camera and/or a lidar unit arranged in the head 23, to provide a view of the ground in a direction of motion of the robot. The optical sensor arrangement provides a prediction of a ground state information regarding a subsequent path to be travelled by the robot 101, e.g. wherein the ground state information provides a hardness and roughness of the ground surface and/or wherein ground state information provides geometric information such as slope information, and/or wherein the ground state information provides information regarding obstacles in the path. Further sensors, e.g. the inertial sensors in the track drive 39, might provide data contributing to the ground state information. For example, the robot 101 is configured to automatically change between the full track mode and the stand-up mode on the basis of the prediction on the ground state information.

Additionally the robot 101 might provide the locomotion by a stepped motion of the legs 3, e.g. wherein the lower pulley 33 is locked during the stepped motion of the legs. Alternatively the lower pulley 33 might be idling.

It goes without saying that the robot may comprise various kinds of damping elements which reduce excitation of resonance frequencies or at least make at least one of stepped, rolling, and track locomotion more robust. Damping elements can be added in parallel or serial to any structural and relative moving element. They could be passive, semi-active or active.

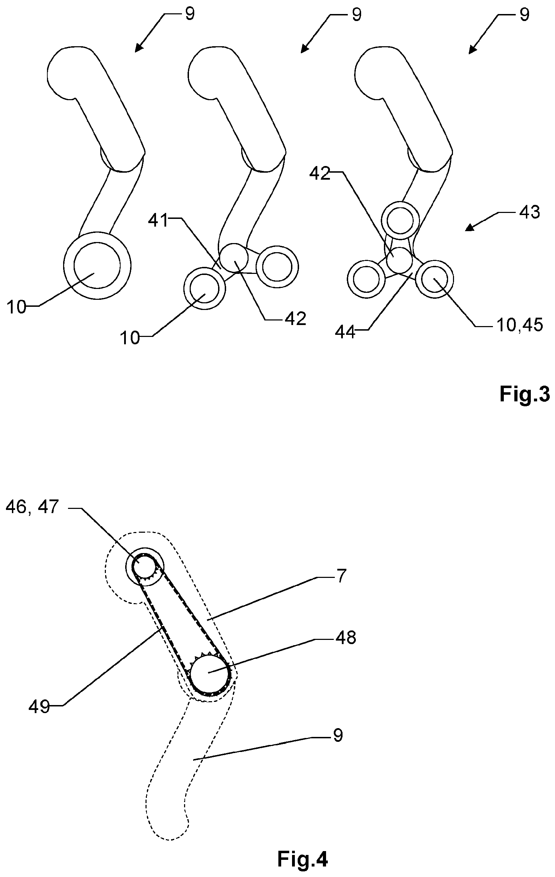

**Figure 3** depicts several exemplary embodiments of wheel arrangements as they could be implemented in a robot according to the invention, i.e. (on the left) a single wheel 10 arranged at the distal end of the lower part of the leg 9, (in the middle) a two-wheel arrangement where two wheels 10 are mounted to suspension elements 41, and (on the right) a tri-wheel arrangement 43.

By way of example, suspension elements are mounted to a main axis of the respective wheel arrangement such that they are at least rotatable relative to the main axis 42. The suspension elements 41 might be rigidly connected to each other or might be independently rotatable. For example, the suspension elements 41 or the main axis 42 comprises/comprise elastic materials.

For example, arrangements with multiple wheels provide improved traversing of uneven ground by providing two stable contact points for each of the legs 3.

The tri wheel arrangement 43 comprises three wheels 10 attached to a wheel frame 44 configured to support the three wheels 10 in a circular pattern, e.g. wherein the wheel frame 44 is rigid. The main axis 42 links the wheel frame 44 to the remainder of the leg 3 and provides a rotational degree of freedom of the wheel frame 44. Three wheel axes 45 link the wheels 10 to the wheel frame 44 such that each of the wheel axes 45 provides a wheel rotational degree of freedom independently from the rotational degree of freedom of the main axis and from the wheel rotational degrees of freedom of the other two wheel axes. By way of example, apart from improved stability, the tri-wheel arrangement provides for stair climbing via rolling locomotion which, for example, can be advantageous over a stepped motion when carrying heavy loads.

**Figure 4** depicts, with dashed lines, an exemplary embodiment of a mechanically actuated leg as it can be used in a robot according to the invention. The leg comprises an upper part 7 and lower part 9 such that upper 7 and lower parts 9 are connected by a knee joint 8 configured to provide a swiveling movement of the lower part 9 relative to the upper part. The upper part 7 of the leg comprises a drive shaft 46 mechanically connected to an electric motor 47. The knee joint comprises a further shaft 48 mechanically connected to the knee joint, such that a rotation and/or swiveling movement of the further shaft 48 causes a swiveling movement of the knee joint. The drive shaft 46 and the further shaft 48 are connected by a mechanical transmission element 49 such that the drive shaft 46 provides a mechanical actuation of the further shaft 48 via the mechanical transmission element 49. In the depicted embodiment the drive shaft 46 and the further shaft 48 each comprise a toothed area and the mechanical transmission element 49 is a chain drive. Alternative embodiments might comprise (non-exhaustive list) a belt drive, e.g. a v-belt, or a toothed bar as mechanical transmission element 49.

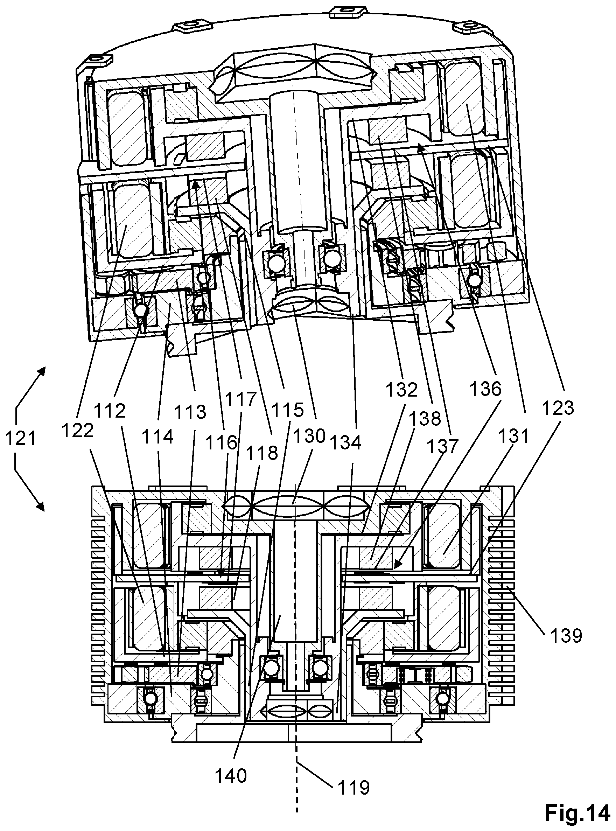

By way of example, the electric motor 47 is arranged at the hip and configured as so-called dual-axis drive motor comprising two nested motors, wherein each of the two motors can be rotated with mutual independent speed and direction. This provides a compact drive module configured to independently drive the hip joint 6 and the knee joint 8. For example, the dual-axis drive motor is configured as described with reference to Fig. 14.

**Figure 5** relates to an exemplary application of a robot according to the invention for monitoring an environment, e.g. a business complex. The environment comprises movable barrier objects such as a door 50 and a window 51. In the example, shown, the door 50 is closed and the window 51 is in a partly open position. Such a condition can lead to security risks, e.g. burglary, potential equipment damage due to adverse weather conditions or additional heating demand.

The depicted environment also comprises a generic security camera 54 mounted on the ceiling. While such generic security cameras 54 are suitable to provide information about the rough condition of the area they are less suitable, especially due to their fixed position, to provide fine details about the condition of the barrier objects 50, 51, e.g. to assess whether the said barrier objects are properly shut and/or secured. To overcome this deficiency, a mobile robot (for the sake of simplicity the figure only depicts the head 5 and a hand joint arrangement 13' of the robot) is used to patrol the environment to control the state of the environment, in particular the state of the movable barrier objects 50, 51.

The exemplarily depicted robot comprises a wireless communication module 55 for accessing a digital reference map of the environment comprising a set of movable barrier objects. The patrol path of the robot is derived to provide a passing of each known movable barrier objects. The robot is also foreseen to localize itself in the environment and identify previously not-known movable barrier objects.

The robot further comprises a lidar unit 23 in the head, wherein the lidar unit 23 is configured to provide a coordinative scan of the environment and the robot is configured to use lidar data of the lidar unit 23 to automatically identify movable barrier objects 50, 51 within the environment. The lidar data, in the figure schematically provided by line scan, comprise information regarding the blocking state of the movable barrier objects. For example, a lidar scan is specifically targeted to obtain information regarding the blocking state of the movable barrier objects 50, 51. Alternatively, the lidar scan for obtaining information regarding the blocking state is a byproduct of a surveying scan being performed continuously to obtain 3D information on the surroundings, e.g. to provide navigation information for the robot.

The blocking state of the movable barrier object 50,51 is determined via a geometric test parameter 58, depicted in the figure as a distance jump, and a respective test criterion. By way of example, geometric test parameters include angle information or distance information. Furthermore, the robot is configured to identify control components such as a window handle 52 and a door handle 53, wherein the geometric test parameter 58 and an associated test criterion provide for correlating a geometric pose of the control components 52, 53 with a locking state of the movable barrier objects 50, 51. By way of example, other control components identifiable by the robot are sliding or rotating latches, mechanical door locks, padlocks etc. Furthermore, some control components might comprise visible blocking elements, e.g. sliding or rotation latches, and the geometric test parameter provides a geometric pose of said blocking components. For example, the robot is configured to access a database comprising the control components 52, 53 associated with a given movable barrier object 50, 51 and a nominal location of the control components 52, 53 relative to the movable barrier object associated to an opened or locked state.

By way of example, the robot is further configured to access a 3D reference model representing the environment with the barrier objects 50, 51 in a reference state, wherein the robot is configured to determine an alert state based on a difference analysis for identifying a difference between the 3D reference model and a 3D model of the environment determined from the actually generated lidar data. For example, the difference analysis is carried out to compare an geometric pose of the movable barrier objects 50, 51 or of the control component 52, 53 with poses in the reference model. The robot then transmits the alert state via the wireless communication module 55 to a site-supervising unit.

In particular, the robot can be configured to provide time stamped lidar data and to determine a target state of the blocking state of the barrier object 50, 51 based on the time stamp. For example, the target state corresponds to a defined time schedule providing different target states as a function of time of day, e.g. wherein a different target state is determined for day and night. The robot may further be configured to provide for learning of different target states based on an assessment of 3D models of the environment, which were generated based on older lidar data.

The robot can be configured to autonomously patrol the environment according to a predefined patrol path. This could include specific deployment of the robot to check a target barrier object. For example, the robot is configured to provide a user interface, which allows the selection of one or more barrier objects 50, 51. Upon receiving an investigation request which, for example, comprise 1.) navigating to a target location provided by the investigation request; 2.) identifying the movable barrier objects in a surroundings of the target location; 3.) determining the blocking state of the movable barrier objects 50, 51 in the surroundings of the target location; 4.) and reporting the blocking state of the movable barrier objects 50, 51 via a the wireless communication module 55, the robot autonomously carries out the tasks of the request.

For interacting with the environment, e.g. to open/close doors 50 or windows 51, the robot comprises a hand joint arrangement 13' with mechanically actuated gripping elements 60. In the embodiment shown, the gripping elements 60 form a three-finger claw. Various other configurations are possible, e.g. depending on the task of the robot and the type of objects to be interacted with. By way of example, the gripping elements 60 further comprise specific interaction elements configured to provide interaction with a specific object. For example, the specific interaction elements are configured to provide interaction with a key or a keyhole, a frame or ball-lock element, a magnetic counterpart, or a tool. The robot is configured to interfere with the control component 52, 53 of the barrier object 50, 51, in particular with the gripping elements 60, to change its blocking state.

The robot is configured to autonomously interact with a barrier object 50,51, e.g. upon detection of a deviation of the blocking state of the barrier object 50, 51 from a target state. In particular, the robot can be configured to autonomously interfere with the barrier object 50, 51 on the basis of a warning, e.g. wherein the warning is based on data of the robot or an external sensor. For example, the warning is based on temperature or humidity data for the environment and the robot is configured to close an open window 51 in case the temperature is below / the humidity is above a threshold. The warning may also be based on weather forecast data comprising an alert for adverse weather conditions and the robot, e.g. wherein the robot is configured to verify the blocking state of the barrier objects 50, 51 as a result and open/close the barrier objects based on a given weather dependent rule.

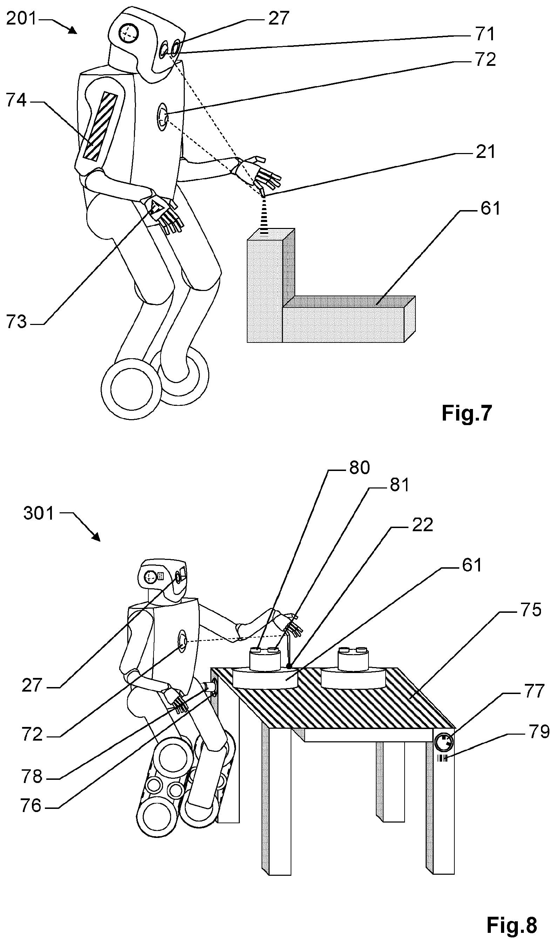

**Figures 6** **and** **7** depict a robot embodiments according to the invention, wherein the robots are configured to perform a coordinate measurement of a measurement object 61 by tactile (Fig. 6) or optical (Fig. 7) probing measurements carried out with sensors arranged at the hand of the robot.

For example, as depicted by **figure 6****,** the robot comprises a hand joint arrangement 13 forming a hand with five fingers, wherein one of the fingers is configured to act as a tactile sensor unit 22. The coordinate measurement is performed by contacting the tactile sensor unit 22 with a measurement object 61 and guiding the tip of the tactile sensor along a measurement path 64 on the object 61 by adjusting the poses of the joints while recording the coordinates of the measurement path 64.

By way of example the depicted shoulder joint 11 provides two shoulder joint rotational degrees of freedom, the depicted elbow joint 12 provides one rotational degree of freedom, while the hand joint arrangement 13 provides further two rotational degrees of freedom.

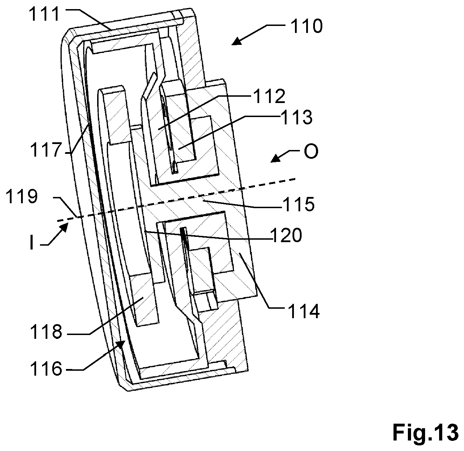

The coordinates are determined by using angle encoder data provided by multiple angle encoders 68, 69, 70 configured to measure angular positions of the respective joints 11, 12, 13. While more degrees of freedom enable more complex measurement paths 64 inaccuracy of angle encoders 68, 69, 70 and/or drive components of the joints 11, 12, 13 leads to a reduced precision in setting the measurement path 64. By way of example, the angle encoders 68, 69, 70 are provided by a robotic drive module as depicted by Fig. 13, e.g. in order to provide the necessary angular position accuracy.

In the embodiment shown, the arm 4 also comprises an optical sensor 21 arranged to or integrated into the hand of the robot. The optical sensor 21 might be a metrology grade sensor for providing probe measurements by itself (e.g. see Fig. 7). However, here the optical sensor unit 21 is configured as a visual aid to ensure that the tactile sensor unit 22 is properly in contact with the measurement object 61 or that the measurement path 64 contains no obstacles. For example, such a visual aid is advantageous in case a view on the measurement path 64 is obstructed as seen from the optical sensor of the robot on the head or the chest.

**Figure 7** depicts a further embodiment of the mobile robot 201 according to the invention, wherein the robot 201 is configure to perform a coordinate measurement on a measurement object 61 by using an optical sensor unit 21 integrated into or arranged in the hand of the robot. The optical sensor unit 21 is configured to perform laser-based distance probing, e.g. on the basis of laser interferometry, time of flight timing (measuring start and stop time of an emitted and returning probe signal), or a laser triangulation measurement. The optical sensor unit 21 could also be configured to perform camera-based distance probing, e.g. on the basis of a photogrammetry method such as stereo imaging.

In the embodiment shown, the robot 201 comprises a tracking device 71 arranged in the head and a tracking device 72 arranged in the main body 2, e.g. wherein the tracking devices are embodied as laser trackers. The tracking devices 71, 72 provide for determining and tracking a reference position close to the optical sensor which, for example, allows to lower requirements on position giving accuracy of angle encoders associated with the joints up to the reference position. Alternatively or in addition, the tracking sensors 71, 72 are utilized to calibrate the angle encoders of the arm.

In the embodiment shown, the robot 201 also comprises a camera 27, e.g. arranged in the head, configured to provide image data for localizing a specific region of the arms, e.g. for image-based tracking of an arm movement and (indirectly via the arm movement) of the optical sensor unit 21. For example, for aiding the image-based tracking the arm comprises a tracking pattern 74 and the robot 201 is configured to automatically recognize tracking pattern sections 74 in images by the camera 27 and to associate one of the pattern sections 74 to a relative position of the one of the pattern sections with respect to the optical sensor unit 21. In particular, a plurality of tracking patterns 74 are provided to enable a tracking of the pose of a plurality of joints and/or limb components. For example, the use of tracking patterns 74 allows uninterrupted tracking in cases where the tracking sensors 27,71,72 do not have direct line of sight on the tactile sensor unit or the optical sensor unit.

Alternatively or in addition to the use of a tracking pattern or tracking target, the robot is configured to access a 3D model of the arms and to recognize arm features within images of the camera 27. The robot can then automatically associate one of the arm features to an arm feature within the 3D model of the arm and, based thereof, derive a relative position of the one of the arm features relative to the optical sensor unit 21 or the tactile sensor unit 22.

By way of example, the robot 201 itself is also configured to be tracked, e.g. for referencing measurement by the robot in an outer coordinate system, for which robot 201 comprises a tracking target 73 on each of the left and right hand joint arrangements 13. For example, the tracking target 73 is embodied as a retroreflector and foreseen to be measured and tracked by an external laser tracker, wherein the tracking target is configured such that the external laser tracker can determine the pose of the tracking target with six degrees of freedom (6DoF). The optical sensor unit 21 has a fixed, rigid relative pose to the tracking target 73.

**Figure 8** depicts a further embodiment of a robot according to the invention, wherein the robot 301 is configured to perform a coordinate measurement on a measurement object 61 by a tactile sensor unit 22 arranged at a hand of the robot 301. Here, the measurement object 61 is placed on a measurement platform 75, which comprises a first docking point 76 and a second docking point 77. The robot 301 comprises a coupling interface 78 configured to provide releasable rigid docking to the docking points 76, 77 of the measurement platform 75. As a result of the rigid docking, any movement of the tactile sensor unit 22 relative to the robot 301 only depends on movements of joints between the tactile sensor unit 22 and the coupling interface 78. It is thus sufficient to provide accurate angular positioning determining only for this subset of joints between the tactile sensor unit 22 and the coupling interface 78.

By way of example, each of the joints of this subset of joints is equipped with a robotic drive module as depicted by Fig. 13.

Alternatively or in addition, the robot 301 comprises a laser tracker 72 in its main body. The laser tracker 72 is rigidly mounted on the robot with a fixed relationship to the position of the coupling interface 78. The laser tracker is configured to provide tracking of a part of the robot which is arranged between the coupling interface 78 and the tactile sensor unit 22. For example, the laser tracker is used to track the tactile sensor unit 22 and/or a part of the arm 4 which comprises the tactile sensor unit 22. The tracking by the laser tracker 72 can then be used to determine 3D position data of the tracked robot part, e.g. wherein the tracked robot part comprises a tracking target for aiding the laser-based tracking.

In the embodiment shown, the robot 301 further comprises a camera 27 in the head. While the head does not have a fixed positional relationship to the coupling interface 78 it might comprise an end stop with a fixed positional relationship to the coupling interface 78. Thus, similar to the laser tracker 72, the camera 27 an be used to provide automatic image-based tracking of a part of the robot which is arranged between the coupling interface 78 and the tactile sensor unit 22. For example, tracking by the camera 27 is aided in that the part to be tracked comprises a visual pattern for aiding the image-based tracking.

The other arm of the robot comprises a further hand joint arrangement. The further hand joint arrangement is configured to grab an object, e.g. the measurement object 61. Similar to the arm comprising the tactile sensor unit 22, any movement of the hand of the other arm only depends on movements of joints between the tactile sensor unit 22 and the coupling interface 78

By way of example, the docking points 76, 77 are associated with a docking point pattern 79, e.g. embodied as a bar code. The robot 301 is configured to use images by the camera 27 for pattern identification and pattern analysis of a docking point pattern 79 associated with one of the docking points, and to associate the docking point pattern 79 with pose information of the respective docking point. For example, the robot is configured to access a database comprising different patterns and associated pose parameters for each of the different docking point patterns 79. Alternatively or additionally, the docking points 76, 77 and the coupling interface 78 might be configured for transfer the pose information by electronic communication through the docking point 76 77.

For the depicted measurement platform 75 with two docking points 76, 77 the robot can be configured to perform a distance probing measurement such that 1.) the robot 301 docks to the first docking point 76, 2.) a first distance probing measurement relative to the first docking position 76 by the tactile sensor unit 22 is performed, 3.) the robot 301 docks to the second docking point 77, 4.) a second distance probing measurement relative to the second docking position 77 by the tactile sensor unit 22 is performed, and 5.) the first distance probing data with the second distance probing data is merged based on the pose information of the first and second docking points 76, 77.

The pose information might be obtained via electronic communication. The relative pose of the first docking point to the second docking point might be obtained via merging cardinal features 80, 81 of the measurement object 61 in the first and second distance probing data. Cardinal features 80, 81 in the sense of the present invention are accessible from both the first 76 and second docking points 77 and recognizable in the distance probing data due to visual, geometric or other distinguishing characteristic.

Alternatively to a docking mechanism for rigid docking (or in addition), the coupling interface comprises a high precision coupling sensor unit, e.g. comprising capacitive sensors with measuring ranges of up to some millimeters, which are distributed in space and measure positional 6DoF changes relative to the coupling counterpart as soon as the coupling interface is arranged in a docking zone. By way of example, visual cameras could be used or other sensors to measure effects near the docking-zone.

The docking mechanism, i.e. the coupling interface, can be placed anywhere on the robot, e.g. at a hand, at the main body, or at a limb. For example, multiple coupling interfaces are provided on the robot.

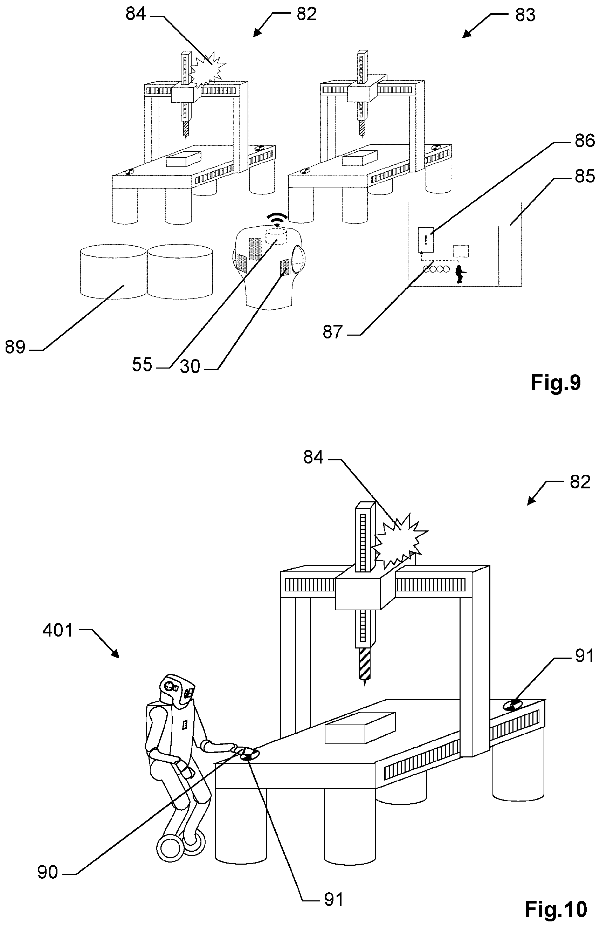

**Figure 9** depicts an exemplary application of a robot according to the invention in a factory environment with a plurality of machines 82, 83. The robot comprises a microphone unit having a plurality of microphones 30, in particular at least three microphones, configured to acquire sounds generated within the factory environment. The first machine 82 generates a noise 84 deviating from the norm. The robot comprises an event detector/localization unit 85 to identify the noise 84 deviating from the norm and to determine the location 86 of the singled out noise 84. The event detector/localization unit 85 might utilize phase shift between the three microphones 30 to localize the source of the singled out noise. For example, the robot comprises a unidirectional microphone, e.g. a low sensitivity microphone with sensitivity below 40 dBV, and the event detector/localization unit 85 determine the location 86 of the singled out noise 84 based on an orientation and sound level of the unidirectional microphone.

The robot is configured to derive a path 87 to the location 86 of the singled out noise 84 on the basis of a digital model of the environment, derived by perception sensors of the robot. The digital model might comprise the location of further machines. In particular the robot is configured to avoid further machines and other obstacles 89. The event detector/localization unit 85 might access further data, in particular from multiple microphones installed in the factory environment in fixed positions and/or associated with a specific machine 82, 83. Alternatively the path 87 is determined and provided to the robot by the use of external devices and the robot is configured to receive the path 87 via a wireless communication module 55.

By way of example, the robot is configured to derive a patrol pattern on the basis of the digital model of the environment such that sound generated by each of the plurality of machines 82, 83 is acquired in at least one sound acquisition point of the patrol pattern. Alternatively or in addition, such patrol patterns are provided by the aid of external devices and the robot is configured to receive a patrol pattern via a wireless communication module 55.

By way of example, the system is configured to use a machine learning algorithm for training a vibration model providing indicators for different maintenance states of the machines, e.g. by training the vibration model with normal/abnormal data and then use it with the measured vibrational signal to identify if there is an abnormal state. For example, the training of the vibration is combined with operator feedback and the vibration model is retrained based on the operator feedback.

Similarly, the detection of the singled-out noise could be trained as well based on normal/abnormal state of the factory and re-trained continuously to improve the quality of the singled-out noise event detection.

**Figure 10** depicts the robot 401 described with reference to Fig. 9, wherein the robot 401 has approached the first machine 82 which generates a noise 84 deviating from the norm. The robot 401 comprises a vibration sensor 90 arranged on the mechanically actuated arm 4. By autonomously bringing a probing component of the vibration sensor 90 into contact with a vibration measuring point 91 on the machine 82, the robot 401 derives vibration data of the machine 82. For example, the vibration sensor 90 comprises at least one of an inertial measurement unit, a microphone, a piezo sensor, and an optical sensor. In particular, the vibration sensor 90 is configured to provide the vibration data by direct motion coupling.

By way of example, the vibration measurement point 91 is a predefined point on the machine, e.g. wherein the robot is configured to access a look-up-table to autonomously identify the vibration measurement point 91 on the machine 82. The measurement point 91 may be specifically marked on the machine to aid finding by the robot 401 or the robot may be configured to find the measurement point 91 by analyzing the geometry of the machine. A database may also comprise reference data for a normal operation and/or for specific worn/faulty states of the respective machine 82. For example, the database comprises a vibration frequency spectra representing said different states.

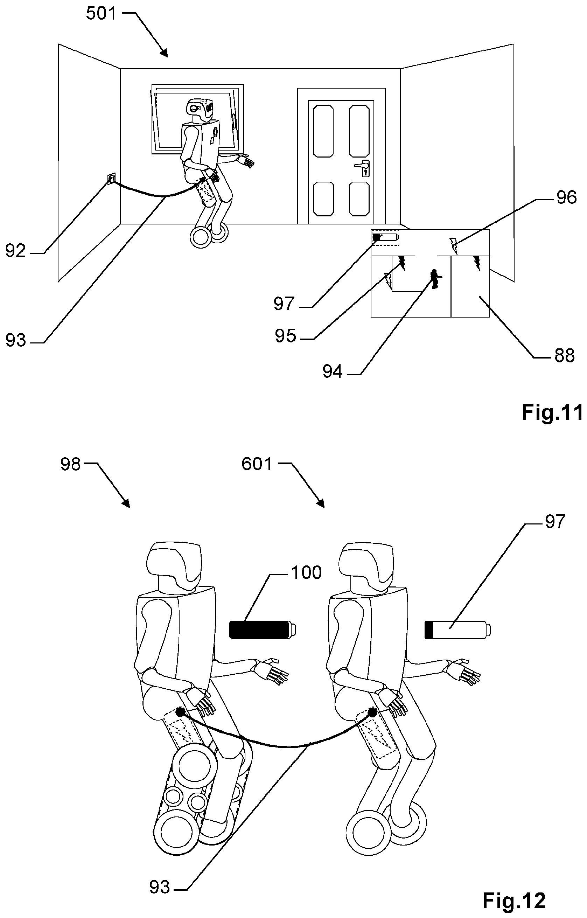

**Figure 11** depicts a further embodiment of a robot 501 according to the invention, wherein the robot 501 comprises a power cable 93 compatible with a power outlet 92 of the environment and one arm is configured to autonomously plug the power cable 93 to the power outlet 92. The robot 501 is configured to derive a model 88 of the environment on the basis of perception data, e.g. provided by a camera, a lidar unit, and/or a structured light scanner, and to localize 94 itself in the model 88, e.g. on the basis of a SLAM process. The robot 501 is further configured to recognize the power outlets 92 in the environment and to localize outlets 95, 96 in the model.

By way of example, the robot 501 comprises different power cables, each configured to be compatible with different power outlets respectively. The robot is configured to categorize the power outlets 95, 96 in the model based on their compatibility with the power cables. In particular, the robot 501 is configured to prioritize power outlets based on their charge rate characteristics, e.g. to prioritize power outlets with the largest maximal charge rate.

The robot 501 might be preferably charged on a charging station. However, the robot 501 is dispatched to one of the locations of power outlets 95, 96 by evaluating energy consumption to reach the charging station against energy consumption to reach one of the locations of power outlets 95,96, e.g. based on a threshold criterion for a remaining energy level 97 of the robot 501.

**Figure 12** depicts a further embodiment of a robot 601 according to the invention, wherein the robot 601 comprises a power cable 93 and a power outlet/inlet which is compatible with a power inlet/outlet of a further robot 98. The power cable 93 enables connection between the two robots 601, 98 and a transfer of electric energy between the two robots, e.g. to a battery compartment 20 of the robot 601.

By way of example, the robot 601 has a remaining energy level 97 such that the robot 601 cannot reach a charging station nor a power outlet. The dispatched further robot 98 has remaining energy level 100 allowing a transfer of electrical energy to the robot 601. The robots 601 is configured to autonomously connect to the further robot 98 by connecting the power cable 93 to the power outlet 99 of the further robot 98.

**Figure 13** shows in a 3D-cross sectional view of an exemplary robot drive unit 110 to be used in a metrological robot such as a humanoid robot of Figures 6-8, with high precision measuring instruments such as a metrologic laser scanning unit. The drive unit 110 comprises inside a housing 111 an electric motor with a rotor 112 and a stator (not depicted). For transmission of the rotor movement, the drive unit 110 further comprises a gearbox 113, for example a cycloidal gear as in principle known in the art. The gearbox 113 picks up the rotor rotation on its gearbox input side or primary side I (in the figure on the left) and transmits the rotation to its gearbox output side or secondary side O (in the figure on the right). A gear output axis or flange 114 is arranged at the gearbox output side O.

The drive module 110 further comprises an angle or rotary encoder 116 with a scale 118 and a sensing part 117 for measuring a rotation or rotational position of the gearbox 113 resp. for measuring a position of the output axis 119. In contrast to known embodiments, the rotary encoder 116 is arranged on the input side I of the drive unit 110 resp. gearbox 113 (i.e. arranged on the left in the figure).

Therefore, the encoder 116 is connected to the output side O by a connecting part 115. In the example, the connecting part 115 is embodied as a shaft in the center of the drive unit 110 which connects the flange 114 with the scale 118. The scale 118, arranged on the inside distal end of connection shaft 115 is for example embodied as a glass ring or circle as part of an opto-electronic angle encoder 116, with the ring or circle plane perpendicular to the axis of rotation or output axis 119. Alternative measurement principles can for example be magnetic or capacitive ones as in principle known in the art. The glass ring 118 is rigidly attached to the connection shaft 115 by a shaft extension or shaft disc 120 which extends parallel to the glass circle 118 at the input side I as depicted.

Thus, the output rotation of the gear 113 is transferred or returned to the input side I by the connection 115 and the encoder scale 118 rotates identically to the gear output rotation. The axis 119 going through the motor axle is connecting the gear output with the encoder disc 118, bringing the output rotation to the high precision encoder 116. Hence, by reading or sensing scale 118 with the encoder's sensor arrangement 117, the gear output rotation can be measured.

Alternatively to the depiction, the shaft disc 120 can be embodied itself as a code carrier or encoder rotor disk resp. can comprise scaling features which can be read or sensed by encoder sensors 117, e.g. optical scale elements. As another example, one or more magnets are attached to the inside end of shaft 115 to be sensed by a hall sensor situated at the PCB, an encoder arrangement which allows for absolute rotary angle measurement.

As indicated in the figure, the encoder's sensing part resp. the active part of the encoder 116 is arranged on the left inner side of the housing 111. For example in case of an opto-electronic measurement principle, a light emitting and receiving unit is arranged on a PCB for emitting light towards the glass ring 118 and receiving light reflected back from code elements of ring 118.

With the shown configuration, the encoder glass circle 118 can be mounted directly above the motor PCB. Thus, the arrangement allows to place the encoder sensors 117 on same PCB as the motor electronics. Therefore, a single PCB is sufficient and the drive unit 110 has a compact, space minimized design.

A motor controller of the robotic drive unit 110 can be programmed to use the position information from the rotary encoder 116 to control the motor commutation. Thereby, the design with only one, common PCB, i.e. integration of the encoder electronics on the motor circuit board, facilitates the arrangement for such a motor control using the output of the integrated rotary encoder. Additionally or alternatively, motor control by rotational position information can be implemented by an additional (low-accuracy) rotation sensor situated at the motor rotor side, i.e. before the gear 113, as in principle known in the art. For example, a single hall sensor, e.g. arranged as mentioned above, covering only one "coil interval" (360°/n coils) and/or a magnetic feedback of motor coils is used for motor control.

**Figure 14** shows an embodiment of a robotic drive joint as a dual axis drive joint 121 in a 3D-cross sectional view (top panel) and 2D-cross sectional view (bottom panel), as it can be used in a robot according to the invention.

Like the example depicted in Figure 13, the drive unit 121 comprises a motor -here denoted outer motor- with an (outer) stator (coils) 122 and (outer) rotor 112, the rotation of which is in the example transmitted by a gear 113 such as a cycloidal gearbox to a gear output 114, for example for driving a first robot part. As explained in more detail above, the gear output side rotation is transferred conformingly to the inner side via a rigid connection 115 to a (first) encoder 116 or more precisely to a (first) scale 118 such as a circular glass scale. The first scale 118 can be sensed by a sensing part 117 of the first encoder 116 arranged at a PCB 123 in the inner of the drive unit 121, e.g. integrated in a motor circuit board.

Above that first or outer motor arrangement with gear 113 and encoder 116 for reading the gear's output rotation at the gear's input side, the drive unit 121 comprises a second or inner motor arrangement, therewith being a dual axis drive unit 121. The inner motor comprises an inner stator 131 and an inner rotor 132 which is led to the output side of the drive unit 121. However, in contrast to the outer drive without gear transmission, therewith providing a direct inner motor output 134, for example for driving a second robot part.

The drive unit 121 further comprises a second encoder 136 for measuring the rotation of the inner motor resp. inner rotor. This "inner" encoder 136 comprises a scale 138, too, e.g. a glass circle or other form of a code carrier as known in the art. The scale 138 is read by a sensor 137. The second sensor(s) 137 is arranged on the other side of PCB 123 as the first sensor(s) 117, hence, the drive unit 121 comprises a "central" PCB, which can also comprise the motor circuit, with encoder sensors 117,137 on both sides. Therefore, only one static PCB 123 and only one micro controller for all motors as well as encoders for two independent motors or drives is needed.

The drive unit 121 further comprises a static electrical and mechanical interface 130 with an electrical or magnetic connector, which can be embodied for example for attachment by snapping or by screwing, with hollow a central shaft 140, e.g. for cable feed through, and can comprise an integrated cooling as schematically indicated by gills 139. Thus, a dual axis drive unit 121 with a common housing and interface 130 for two drives is provided.

This dual axis drive unit 121, with or without a gearbox 113, shows a relatively simple static interface (regarding electric cabling and mechanics) and further provides the advantages that the last movable element is fully 360° operatable without any cabling limitations. Both drives can be nonstop rotated about the rotation axis 119 a complete rotation with mutual independent speed and direction. Thereby, each output is sensor controlled regarding angle, torque and/or force by a respective angle sensor 116,136, thus controlled.

The dual axis drive module 121 may be modified or show additional features such as mentioned with regard to the embodiments described with regard to Figure 13 or appropriate additional components, e.g. an additional (low-accuracy) rotation sensor situated at a motor rotor side .

Although the invention is illustrated above, partly with reference to some preferred embodiments, it must be understood that numerous modifications and combinations of different features of the embodiments can be made. All of these modifications lie within the scope of the appended claims.

## Claims

1. Humanoid robot (1), comprising
• a main body (2),
• two mechanically actuated legs (3) attached to the main body (2) at a lower part of the main body (2) and configured to provide locomotion of the robot (1) over ground, wherein each of the legs (3)
∘ is attached to the main body (2) by a hip joint (6) providing movement of an upper part (7) of the leg (3) relative to the main body (2),
o comprises a knee joint (8) providing movement of a lower part (9) of the leg (3) relative to the upper part (7) of the leg (3), and
∘ comprises a wheel (10) at a distal end away from the knee joint (8) for contacting the ground in order to provide the locomotion,
• two mechanically actuated arms (4) attached to the main body (2) at an upper part of the main body (2) and configured to move relative to the main body (2), and
• a, particularly mechanically actuated, head (5) attached to the main body (2) at the top of the main body (2),
wherein the robot (1) is configured to provide the locomotion in a walking mode by stepped motion of the legs (3) and in a driving mode by rolling on the wheels (10),
wherein one of the two legs (3) comprises a battery compartment (20) arranged between the knee joint (8) and the hip joint (6) and configured to accommodate a swappable battery such that the battery - when accommodated in the battery compartment (20) - provides electrical energy to be used for driving a motion of the robot (1), in particular a motion of one the two legs (3) and/or one of the two arms (4),
wherein the robot (1) comprises a further battery compartment arranged between the knee joint (8) and the hip joint (6) of the other of the two legs (3) - such that each of the two legs (3) comprises a battery compartment (20) - and configured to accommodate a further swappable battery such that the further battery - when accommodated in the further battery compartment - provides electrical energy to be used for a motion of the robot (1), in particular a motion of one of the two legs (3) and/or one of the two arms (4),
**characterised in that** the robot (1) is configured to provide for a battery replacement for the battery compartment (20) during continuous operation of the robot (1), particularly during motion by the two arms (4),
and **in that** each of the battery compartments (20) comprises a circuit breaker configured to be activated for battery replacement for the respective battery compartment (20) and to provide electrical disconnecting of a battery located in the respective battery compartment (20) so that the robot (1) is still supplied with electric energy from the other battery compartment (20).

2. The humanoid robot (1) according to claim 1, configured to use one of the arms (4) to autonomously remove a battery located in the battery compartment (20) and to autonomously place a battery into the battery compartment (20), particularly wherein the battery compartment (20) comprises a quick release mechanism configured to be activated by the robot (1).

3. The humanoid robot (1) according to any one of the preceding claims,
wherein each of the hip joints (6) provides movement in two rotational degrees of freedom relative to the main body (2) and each of the knee joints (8) provides movement in one rotational degree of freedom,
in particular wherein the robot (1) is configured that each of the knee joints (8) is driven by a respective electric motor (47) located away from the knee joint (8), wherein each of the legs (3) comprises a mechanical transmission element (49) driven by the respective electric motor (47), in particular a belt or a chain, to provide mechanical actuation of the movement about the respective knee joint (8).

4. The humanoid robot (1) according to any one of the preceding claims, wherein each of the arms (4) is attached to the main body (2) by a shoulder joint (11), wherein the shoulder joint (11) provides movement in one rotational degree of freedom (65), particularly two rotational degrees of freedom (65), relative to the main body (2), and each of the arms (4) comprises
• an elbow joint (12), wherein the elbow joint (12) provides movement in one rotational degree of freedom (66), and
• a hand joint arrangement (13), in particular a hand joint arrangement (13) configured for performing a gripping operation.

5. The humanoid robot (1) according to claim 4, wherein each of the shoulder joints (11), the elbow joints (12), and the hand joints (13) comprises a robotic drive module (110) for driving rotary joint movement, wherein the robotic drive module (110) comprises
• a rotary drive comprising a motor circuit board (123), a stator, and a rotor (112), wherein the rotor (112) is configured to rotate - controlled by the motor circuit board (123) - relative to the stator about an axis of rotation,
• a gearbox (113) configured to transform - according to a defined gear ratio - a rotary motion of the rotor (112) about the axis of rotation into a rotary motion of a gearbox output component about the axis of rotation, wherein - axially with respect to the axis of rotation - the motor circuit board (123) and the stator are arranged on one side of the gearbox (113), denoted gearbox input side, and the gearbox output component engages the gearbox (113) from the other side of the gearbox (113), denoted gearbox output side, and
• a rotary encoder (68-70) configured to detect a rotation of the gearbox output component about the axis of rotation,
wherein
• the drive module comprises a connecting part (115) which extends from the gearbox output side to the gearbox input side and is configured to pick up the rotation of the gearbox output component in a rigid manner, thereby providing rotation of the connecting part (115) conforming to the rotation of the gearbox output component, and
• the rotary encoder is arranged on the gearbox input side and configured to provide for measuring a rotation of the connecting part (115) about the axis of rotation.

6. The humanoid robot (1) according to any one of the preceding claims, wherein at least one of the arms (4), in particular at a distal end away from an attachment point of the arm (4), comprises a probing sensor arrangement, particularly comprising an optical sensor (21) configured to provide optical sensor data and/or a tactile sensor (22) configured to provide tactile scanning.

7. The humanoid robot (1) according to any one of the preceding claims, wherein the robot (1) comprises a scanning lidar unit (23) arranged in an upper part of the robot (1) and configured to provide - during movement of the robot (1) over ground - a scanning movement of a laser measurement beam relative to two rotation axes, and, based thereof, to generate light detection and ranging data for generating a three-dimensional point cloud, in particular wherein the lidar unit (23) is located in the head (5), wherein the head (5) comprises a top side (14) opposite an attachment point (15) of the head (5) to the main body (2), a front side (16) adjacent to the top side (14) and a back side (17) opposite the front side (16) and being adjacent to the top side (14), and two opposite transverse sides (18,19) respectively adjacent to the top side (14) and the front (16) and back sides (17), wherein one of the two rotation axes of the lidar unit (23) runs through the front side (16) and the back side (17) and the lidar unit (23) is configured to provide - with the front side (16) facing in the direction of travel during forward locomotion - a forward-looking field of view around the one of the two rotation axes.

8. The humanoid robot (1) according to any one of the preceding claims, wherein the robot (1) comprises a ToF unit (26) arranged in an upper part of the robot (1) and comprising an arrangement of time-of-flight sensors and being configured to provide - during movement of the robot (1) over ground - 3D imaging data of the environment for generating a 3D model of the environment,
in particular wherein the ToF unit (26) is located in the head (5) and the head (5) comprises a top side (14) opposite an attachment point (15) of the head (5) to the main body (2), a front side (16) adjacent to the top side (14) and a back side (17) opposite the front side (16) and being adjacent to the top side (14), and two opposite transverse sides (18,19) respectively adjacent to the top side (14) and the front (16) and back sides (17), wherein the ToF unit (26) is arranged to provide - with the front side (16) facing in the direction of travel during locomotion - a forward-looking field of view.

9. The humanoid robot (1) according to any one of the preceding claims, wherein the head (5) comprises a top side (14) opposite an attachment point (15) of the head (5) to the main body (2), a front side (16) adjacent to the top side (14) and a back side (17) opposite the front side (16) and being adjacent to the top side (14), and two opposite transverse sides (18,19) respectively adjacent to the top side (14) and the front (16) and back sides (17), wherein each of the transverse sides (18,19) comprises an imaging camera (27) such that the two imaging cameras (27) are arranged opposite each other and provide opposite field-of-views, particularly wherein each of the two cameras (27) provide a fully spherical 360° field-of-view.

10. The humanoid robot (1) according to any one of the preceding claims, wherein the main body (2) comprises a structured light scanner (28) configured to provide - during movement of the robot (1) over ground - a 3D scanning of the environment for generating a 3D model of the environment.

11. The humanoid robot (1) according to any one of the preceding claims, wherein the robot (1) comprises a simultaneous localization and mapping unit, SLAM unit, configured to carry out a simultaneous localization and mapping process, denoted as SLAM process, wherein the SLAM process comprising reception of perception data providing a representation of the surroundings of the robot (1) at a current position, use of the perception data to generate a map of an environment, and localization of the robot (1) within the map of the environment,
in particular wherein the robot (1) is further configured to
• access information regarding locations of charging and/or battery replacement stations within the map of the environment, in particular information regarding availability of charging positions and/or replacement batteries in each of the stations,
• localize itself with respect to a location of at least one charging and/or battery replacement station within the map of the environment and provide an assessment regarding the reachability of the at least one charging and/or battery replacement station based on a charge state of the swappable batteries, and
• trigger movement to the at least one charging and/or battery replacement station on the basis of the reachability of the station, in particular wherein the reachability is lower than a range threshold.

12. The humanoid robot (1) according to any one of the preceding claims, wherein the robot (1) comprises a charging element, in particular a wired connector, wherein the charging element is configured to provide electrical energy during the battery replacement, in particular wherein the robot (1) is configured to autonomously connect the charging element to a charging position during the battery replacement.

13. The humanoid robot (1) according to any one of the preceding claims, wherein the robot (1) comprises a backup battery configured to provide electrical energy during the battery replacement.

14. The humanoid robot (1) according to any one of the preceding claims, wherein each of the legs (3) comprises a plurality of wheels (10) for contacting the ground in order to provide the locomotion,
in particular wherein each of the legs (3) comprises a tri-wheel arrangement (43) which comprises
• three wheels attached to a wheel frame (44) configured to support the three wheels in a circular pattern,
• a main axis (42) linking the wheel frame (44) to the remainder of the leg (3) and providing a rotational degree of freedom of the wheel frame (44), and
• three wheel axes (45) which are different from the main axis (42), wherein the wheel axes (45) link the wheels to the wheel frame (44), wherein each of the wheel axes (45) provides a wheel rotational degree of freedom independently from the rotational degree of freedom of the main axis (42) and from the wheel rotational degrees of freedom of the other two wheel axes (45).

15. The humanoid robot (1) according to any one of the preceding claims, wherein the robot (1) is configured to provide self-balancing movement control for movement of the arms (4) during locomotion that supports the robot (1) being balanced in a defined upright position, for which the robot (1) comprises an inertial sensor (38), particularly a tilt sensor, and a gyroscopic sensor and a control algorithm configured to automatically adjust the relative pose of the two mechanically actuated arms (4) based on the inertial sensor (38) and the gyroscopic sensor.

## Patentansprüche

1. Humanoider Roboter (1), umfassend
• einen Hauptkörper (2),
• zwei mechanisch angetriebene Beine (3), die am unteren Teil des Hauptkörpers (2) an diesem befestigt und so ausgebildet sind, dass sie die Fortbewegung des Roboters (1) auf dem Boden ermöglichen, wobei jedes der Beine (3)
∘ über ein Hüftgelenk (6) am Hauptkörper (2) befestigt ist, das eine Bewegung eines oberen Teils (7) des Beins (3) relativ zum Hauptkörper (2) ermöglicht,
∘ ein Kniegelenk (8) aufweist, das eine Bewegung eines unteren Teils (9) des Beins (3) relativ zum oberen Teil (7) des Beins (3) ermöglicht, und
∘ ein Rad (10) an einem vom Kniegelenk (8) entfernten distalen Ende aufweist, das den Boden berührt, um die Fortbewegung zu ermöglichen,
• zwei mechanisch betätigte Arme (4), die an einem oberen Teil des Hauptkörpers (2) an diesem befestigt und so ausgebildet sind, dass sie sich relativ zum Hauptkörper (2) bewegen können, und
• einen, insbesondere mechanisch betätigten, Kopf (5), der am oberen Ende des Hauptkörpers (2) an diesem befestigt ist,
wobei der Roboter (1) so ausgelegt ist, dass er die Fortbewegung in einem Gehmodus durch schrittweise Bewegung der Beine (3) und in einem Fahrmodus durch Abrollen auf den Rädern (10) gewährleistet, wobei,
eines der beiden Beine (3) ein Batteriefach (20) umfasst, das zwischen dem Kniegelenk (8) und dem Hüftgelenk (6) angeordnet und so ausgebildet ist, dass es eine austauschbare Batterie aufnehmen kann, sodass die Batterie - wenn sie im Batteriefach (20) untergebracht ist - elektrische Energie bereitstellt, die zum Antreiben einer Bewegung des Roboters (1) verwendet wird, insbesondere eine Bewegung eines der beiden Beine (3) und/oder eines der beiden Arme (4),
wobei der Roboter (1) ein weiteres Batteriefach aufweist, das zwischen dem Kniegelenk (8) und dem Hüftgelenk (6) des jeweils anderen der beiden Beine (3) - so dass jedes der beiden Beine (3) ein Batteriefach (20) aufweist - und so ausgelegt ist, dass es eine weitere austauschbare Batterie aufnehmen kann, sodass die weitere Batterie - wenn sie in dem weiteren Batteriefach untergebracht ist - elektrische Energie bereitstellt, die für eine Bewegung des Roboters (1) verwendet wird, insbesondere eine Bewegung eines der beiden Beine (3) und/oder eines der beiden Arme (4), **gekennzeichnet dadurch, dass**
der Roboter (1) so ausgelegt ist, dass er einen Batteriewechsel für das Batteriefach (20) während des Dauerbetriebs des Roboters (1) ermöglicht, insbesondere während der Bewegung durch die beiden Arme (4), und jedes der Batteriefächer (20) einen Schutzschalter umfasst, der so ausgelegt ist, dass er zum Batteriewechsel für das jeweilige Batteriefach (20) aktiviert wird und eine elektrische Trennung einer in dem jeweiligen Batteriefach (20) befindlichen Batterie bewirkt, sodass der Roboter (1) weiterhin mit elektrischer Energie aus dem anderen Batteriefach (20) mit elektrischer Energie versorgt wird.

2. Der humanoide Roboter (1) nach Anspruch 1, der so ausgelegt ist, dass er einen der Arme (4) verwendet, um eine im Batteriefach (20) befindliche Batterie selbstständig zu entnehmen und eine Batterie selbstständig in das Batteriefach (20) einzulegen, wobei insbesondere das Batteriefach (20) einen Schnellverschlussmechanismus umfasst, der so ausgelegt ist, dass er vom Roboter (1) betätigt werden kann.

3. Der humanoide Roboter (1) nach einem der vorstehenden Ansprüche, wobei jedes der Hüftgelenke (6) eine Bewegung in zwei Rotationsfreiheitsgraden relativ zum Hauptkörper (2) ermöglicht und jedes der Kniegelenke (8) eine Bewegung in einem Rotationsfreiheitsgrad ermöglicht,
insbesondere wobei der Roboter (1) so ausgelegt ist, dass jedes der Kniegelenke (8) von einem jeweiligen Elektromotor (47) angetrieben wird, der vom Kniegelenk (8) entfernt angeordnet ist, wobei jedes der Beine (3) ein mechanisches Übertragungselement (49) umfasst, das von dem jeweiligen Elektromotor (47) angetrieben wird, insbesondere einen Riemen oder eine Kette, um eine mechanische Betätigung der Bewegung um das jeweilige Kniegelenk (8) zu ermöglichen.

4. Der humanoide Roboter (1) gemäß einem der vorstehenden Ansprüche, wobei jeder der Arme (4) über ein Schultergelenk (11) am Hauptkörper (2) befestigt ist, wobei das Schultergelenk (11) eine Bewegung in einem Drehfreiheitsgrad (65), insbesondere in zwei Drehfreiheitsgraden (65), relativ zum Hauptkörper (2) ermöglicht, und jeder der Arme (4) umfasst
• ein Ellbogengelenk (12), wobei das Ellbogengelenk (12) eine Bewegung in einem Drehfreiheitsgrad (66) ermöglicht, und
• eine Handgelenkanordnung (13), insbesondere eine Handgelenkanordnung (13), die zur Durchführung eines Greifvorgangs ausgelegt ist.

5. Der humanoide Roboter (1) nach Anspruch 4, wobei jedes der Schultergelenke (11), der Ellbogengelenke (12) und der Handgelenke (13) ein Roboterantriebsmodul (110) zum Antreiben einer Drehgelenkbewegung umfasst, wobei das Roboterantriebsmodul (110) umfasst
• einen Drehantrieb, der eine Motorplatine (123), einen Stator und einen Rotor (112) umfasst, wobei der Rotor (112) so ausgelegt ist, dass er sich - gesteuert durch die Motorplatine (123) - relativ zum Stator um eine Drehachse dreht,
• ein Getriebe (113), das so ausgelegt ist, dass es - gemäß einem definierten Übersetzungsverhältnis - eine Drehbewegung des Rotors (112) um die Drehachse in eine Drehbewegung eines Getriebeausgangselements um die Drehachse umwandelt, wobei - axial zur Drehachse - die Motorplatine (123) und der Stator auf einer Seite des Getriebes (113), der als Getriebeeingangsseite bezeichnet wird, angeordnet sind und das Getriebeausgangselement von der anderen Seite des Getriebes (113), der als Getriebeausgangsseite bezeichnet wird, in das Getriebe (113) eingreift, und
• ein Drehgeber (68-70), der so ausgelegt ist, dass er eine Drehung des Getriebeausgangselements um die Drehachse erfasst,
wobei
• das Antriebsmodul ein Verbindungsteil (115) umfasst, das sich von der Getriebeausgangsseite zur Getriebeeingangsseite erstreckt und so ausgelegt ist, dass es die Drehung des Getriebeausgangselements starr aufnimmt, wodurch eine Drehung des Verbindungsteils (115) gewährleistet wird, die der Drehung des Getriebeausgangselements entspricht, und
• der Drehgeber auf der Getriebeeingangsseite angeordnet und so ausgelegt ist, dass er die Drehung des Verbindungsteils (115) um die Drehachse misst.

6. Der humanoide Roboter (1) gemäß einem der vorstehenden Ansprüche, wobei mindestens einer der Arme (4), insbesondere an einem von einem Befestigungspunkt des Arms (4) entfernten distalen Ende, eine Abtastsensor-Anordnung umfasst, die insbesondere einen optischen Sensor (21), der so ausgelegt ist, dass er optische Sensordaten liefert, und/oder einen taktilen Sensor (22), der so ausgelegt ist, dass er eine taktile Abtastung ermöglicht, umfasst.

7. Der humanoide Roboter (1) nach einem der vorstehenden Ansprüche, wobei der Roboter (1) eine Lidar-Abtasteinheit (23) umfasst, die in einem oberen Teil des Roboters (1) angeordnet und so ausgelegt ist, dass sie - während der Bewegung des Roboters (1) über den Boden - eine Abtastbewegung eines Laser-Messstrahls relativ zu zwei Drehachsen bereitstellt, und auf dieser Grundlage Lichtdetektions- und Entfernungsmessdaten zur Erzeugung einer dreidimensionalen Punktwolke zu erzeugen,
insbesondere wobei sich die Lidar-Einheit (23) im Kopf (5) befindet, wobei der Kopf (5) eine Oberseite (14) gegenüber einem Befestigungspunkt (15) des Kopfes (5) am Hauptkörper (2) aufweist, eine an die Oberseite (14) angrenzende Vorderseite (16) und eine der Vorderseite (16) gegenüberliegende und an die Oberseite (14) angrenzende Rückseite (17) sowie zwei gegenüberliegende Querseiten (18, 19), die jeweils an die Oberseite (14) sowie an die Vorderseite (16) und die Rückseite (17) angrenzen (17) angrenzend sind, wobei eine der beiden Drehachsen der Lidar-Einheit (23) durch die Vorderseite (16) und die Rückseite (17) verläuft und die Lidar-Einheit (23) so ausgelegt ist, dass sie - bei nach vorne gerichteter Vorderseite (16) während der Vorwärtsbewegung - ein nach vorne gerichtetes Sichtfeld um die eine der beiden Drehachsen bereitstellt.

8. Der humanoide Roboter (1) nach einem der vorstehenden Ansprüche, wobei der Roboter (1) eine ToF-Einheit (26) umfasst, die in einem oberen Teil des Roboters (1) angeordnet ist, eine Anordnung von Laufzeitmesssensoren umfasst und so konfiguriert ist, dass sie - während der Bewegung des Roboters (1) über den Boden - 3D-Bilddaten der Umgebung zur Erzeugung eines 3D-Modells der Umgebung bereitstellt, insbesondere wobei sich die ToF-Einheit (26) im Kopf (5) befindet und der Kopf (5) eine Oberseite (14) gegenüber einem Befestigungspunkt (15) des Kopfes (5) am Hauptkörper (2), eine an die Oberseite (14) angrenzende Vorderseite (16) und eine der Vorderseite (16) gegenüberliegende Rückseite (17) und an die Oberseite (14) angrenzend ist, sowie zwei gegenüberliegende Querseiten (18, 19), die jeweils an die Oberseite (14) sowie an die Vorderseite (16) und die Rückseite (17) angrenzen, wobei die ToF-Einheit (26) so angeordnet ist, dass sie - bei der Fortbewegung mit der Vorderseite (16) in Fahrtrichtung - ein nach vorne gerichtetes Sichtfeld bereitstellt.

9. Der humanoide Roboter (1) gemäß einem der vorstehenden Ansprüche, wobei der Kopf (5) eine Oberseite (14) aufweist, die einem Befestigungspunkt (15) des Kopfes (5) am Hauptkörper (2) gegenüberliegt, eine an die Oberseite (14) angrenzende Vorderseite (16) und eine der Vorderseite (16) gegenüberliegende und an die Oberseite (14) angrenzende Rückseite (17) sowie zwei gegenüberliegende Querseiten (18, 19), die jeweils an die Oberseite (14) sowie an die Vorder- (16) und Rückseite (17) angrenzen (17) angrenzen, wobei jede der Querseiten (18, 19) eine Bildaufnahmekamera (27) umfasst, sodass die beiden Bildaufnahmekameras (27) einander gegenüberliegend angeordnet sind und entgegengesetzte Sichtfelder bereitstellen, insbesondere wobei jede der beiden Kameras (27) ein vollständig sphärisches 360°-Sichtfeld bereitstellt.

10. Der humanoide Roboter (1) gemäß einem der vorstehenden Ansprüche, wobei der Hauptkörper (2) einen Strukturlichtscanner (28) umfasst, der so konfiguriert ist, dass er - während der Bewegung des Roboters (1) über den Boden - eine 3D-Abtastung der Umgebung zur Erzeugung eines 3D-Modells der Umgebung bereitstellt.

11. Der humanoide Roboter (1) gemäß einem der vorstehenden Ansprüche, wobei der Roboter (1) eine Einheit zur simultanen Lokalisierung und Kartierung umfasst, SLAM-Einheit, die so ausgelegt ist, dass sie einen Prozess zur simultanen Lokalisierung und Kartierung, bezeichnet als SLAM-Prozess, durchführt, wobei der SLAM-Prozess den Empfang von Wahrnehmungsdaten, die eine Darstellung der Umgebung des Roboters (1) an einer aktuellen Position liefern, die Verwendung der Wahrnehmungsdaten zur Erzeugung einer Karte der Umgebung und die Lokalisierung des Roboters (1) innerhalb der Karte der Umgebung umfasst,
wobei der Roboter (1) insbesondere ferner dazu ausgelegt ist,
• auf Informationen über Standorte von Lade- und/oder Batteriewechselstationen innerhalb der Umgebungskarte zuzugreifen, insbesondere auf Informationen über die Verfügbarkeit von Ladepositionen und/oder Ersatzbatterien in jeder der Stationen,
• sich selbst in Bezug auf einen Standort mindestens einer Lade- und/oder Batteriewechselstation innerhalb der Umgebungskarte zu lokalisieren und eine Einschätzung hinsichtlich der Erreichbarkeit der mindestens einen Lade- und/oder Batteriewechselstation auf der Grundlage eines Ladezustands der austauschbaren Batterien bereitzustellen, und
• auf der Grundlage der Erreichbarkeit der Station eine Bewegung zu der mindestens einen Lade- und/oder Batteriewechselstation auszulösen, insbesondere wenn die Erreichbarkeit unter einem Reichweiten-Schwellenwert liegt.

12. Der humanoide Roboter (1) gemäß einem der vorstehenden Ansprüche, wobei der Roboter (1) ein Ladeelement, insbesondere einen kabelgebundenen Anschluss, umfasst, wobei das Ladeelement so konfiguriert ist, dass es während des Batteriewechsels elektrische Energie bereitstellt, insbesondere wobei der Roboter (1) so konfiguriert ist, dass er das Ladeelement während des Batteriewechsels autonom an eine Ladeposition anschließt.

13. Der humanoide Roboter (1) gemäß einem der vorstehenden Ansprüche, wobei der Roboter (1) eine Pufferbatterie umfasst, die so ausgelegt ist, dass sie während des Batteriewechsels elektrische Energie bereitstellt.

14. Der humanoide Roboter (1) gemäß einem der vorstehenden Ansprüche, wobei jedes der Beine (3) eine Vielzahl von Rädern (10) zum Kontakt mit dem Boden umfasst, um die Fortbewegung zu gewährleisten, insbesondere wobei jedes der Beine (3) eine Dreiradanordnung (43) umfasst, die
• drei Räder umfasst, die an einem Radrahmen (44) befestigt sind, der so ausgebildet ist, dass er die drei Räder in einer kreisförmigen Anordnung trägt,
• eine Hauptachse (42), die den Radrahmen (44) mit dem Rest des Beins (3) verbindet und einen Drehfreiheitsgrad des Radrahmens (44) bereitstellt, und
• drei Radachsen (45), die sich von der Hauptachse (42) unterscheiden, wobei die Radachsen (45) die Räder mit dem Radrahmen (44) verbinden, wobei jede der Radachsen (45) einen Raddrehfreiheitsgrad unabhängig vom Drehfreiheitsgrad der Hauptachse (42) und von den Raddrehfreiheitsgraden der beiden anderen Radachsen (45) bereitstellt.

15. Der humanoide Roboter (1) gemäß einem der vorstehenden Ansprüche, wobei der Roboter (1) so konfiguriert ist, dass er eine selbstausgleichende Bewegungssteuerung für die Bewegung der Arme (4) während der Fortbewegung bereitstellt, die es dem Roboter (1) ermöglicht, in einer definierten aufrechten Position im Gleichgewicht zu bleiben, wozu der Roboter (1) einen Trägheitssensor (38), insbesondere einen Neigungssensor, sowie einen gyroskopischen Sensor und einen Steuerungsalgorithmus umfasst, der so ausgelegt ist, dass er die relative Lage der beiden mechanisch betätigten Arme (4) auf der Grundlage des Trägheitssensors (38) und des gyroskopischen Sensors automatisch anpasst.

## Revendications

1. Robot humanoïde (1), comprenant
• un corps principal (2),
• deux jambes (3) à actionnement mécanique fixées au corps principal (2) au niveau d'une partie inférieure de celui-ci et configurées pour assurer une locomotion du robot (1) sur le sol, dans lequel chacune des jambes (3)
∘ est fixée au corps principal (2) par une articulation de hanche (6) assurant un mouvement d'une partie supérieure (7) de la jambe (3) par rapport au corps principal (2),
∘ comprend une articulation de genou (8) assurant un mouvement d'une partie inférieure (9) de la jambe (3) par rapport à la partie supérieure (7) de la jambe (3), et
∘ comprend une roue (10) à une extrémité distale éloignée de l'articulation de genou (8) destinée à venir au contact du sol afin d'assurer la locomotion,
• deux bras (4) à actionnement mécanique fixés au corps principal (2) au niveau d'une partie supérieure du corps principal (2) et configurés pour se déplacer par rapport au corps principal (2), et
• une tête (5), notamment à actionnement mécanique, fixée au corps principal (2) en haut du corps principal (2),
dans lequel le robot (1) est configuré pour assurer la locomotion dans un mode de marche par un mouvement par pas des jambes (3) et dans un mode de pilotage par roulement sur les roues (10),
dans lequel
l'une des deux jambes (3) comprend un compartiment de batterie (20) agencé entre l'articulation de genou (8) et l'articulation de hanche (6) et configuré pour accueillir une batterie interchangeable de telle sorte que la batterie - lorsqu'elle est accueillie dans le compartiment de batterie (20) - fournisse de l'énergie électrique destinée à piloter un mouvement du robot (1), en particulier un mouvement de l'une des deux jambes (3) et/ou de l'un des deux bras (4), dans lequel le robot (1) comprend un compartiment de batterie supplémentaire agencé entre l'articulation de genou (8) et l'articulation de hanche (6) de l'autre des deux jambes (3) - de sorte que chacune des deux jambes (3) comporte un compartiment de batterie (20) - et configuré pour accueillir une batterie interchangeable supplémentaire de telle sorte que la batterie supplémentaire - lorsqu'elle est accueillie dans le compartiment de batterie supplémentaire - fournisse de l'énergie électrique destinée à être utilisée pour un mouvement du robot (1), en particulier un mouvement de l'une des deux jambes (3) et/ou de l'un des deux bras (4),
**caractérisé en ce que** le robot (1) est configuré pour assurer un remplacement de batterie dans le compartiment de batterie (20) pendant un fonctionnement continu du robot (1), en particulier pendant un mouvement par les deux bras (4),
et **en ce que** chacun des compartiments à batterie (20) comprend un disjoncteur configuré pour être activé pour un remplacement de batterie pour le compartiment de batterie (20) respectif et pour assurer une déconnexion électrique d'une batterie située dans le compartiment de batterie (20) respectif, de sorte que le robot (1) continue d'être alimenté en énergie électrique par l'autre compartiment de batterie (20).

2. Robot humanoïde (1) selon la revendication 1, configuré pour utiliser l'un des bras (4) afin de retirer de manière autonome une batterie située dans le compartiment de batterie (20) et de placer de manière autonome une batterie dans le compartiment de batterie (20), en particulier dans lequel le compartiment de batterie (20) comprend un mécanisme à déclenchement rapide configuré pour être activé par le robot (1).

3. Robot humanoïde (1) selon l'une quelconque des revendications précédentes,
dans lequel chacune des articulations de hanche (6) assure un mouvement selon deux degrés de liberté en rotation par rapport au corps principal (2) et chacune des articulations de genou (8) assure un mouvement selon un degré de liberté en rotation, en particulier dans lequel le robot (1) est configuré de telle sorte que chacune des articulations de genou (8) est pilotée par un moteur électrique (47) respectif situé à distance de l'articulation de genou (8), dans lequel chacune des jambes (3) comprend un élément de transmission mécanique (49) piloté par le moteur électrique (47) respectif, en particulier une courroie ou une chaîne, pour assurer un actionnement mécanique du mouvement autour de l'articulation de genou (8) respective.

4. Robot humanoïde (1) selon l'une quelconque des revendications précédentes,
dans lequel chacun des bras (4) est fixé au corps principal (2) par une articulation d'épaule (11), dans lequel l'articulation d'épaule (11) assure un mouvement selon un degré de liberté en rotation (65), en particulier deux degrés de liberté en rotation (65), par rapport au corps principal (2), et chacun des bras (4) comprend
• une articulation de coude (12), dans lequel l'articulation de coude (12) assure un mouvement selon un degré de liberté en rotation (66), et
• un agencement d'articulation de main (13), en particulier un agencement d'articulation de main (13) configuré pour effectuer une opération de préhension.

5. Robot humanoïde (1) selon la revendication 4, dans lequel chacune des articulations d'épaule (11), des articulations de coude (12) et des articulations de main (13) comprend un module de pilotage robotique (110) destiné à piloter un mouvement rotatif d'articulation, dans lequel le module de pilotage robotique (110) comprend
• un pilotage rotatif comprenant une carte de circuit imprimé de moteur (123), un stator et un rotor (112), dans lequel le rotor (112) est configuré pour tourner - sous le contrôle de la carte de circuit imprimé de moteur (123) - par rapport au stator autour d'un axe de rotation,
• une boîte d'engrenages (113) configurée pour transformer - selon un rapport de réduction défini - un mouvement rotatif du rotor (112) autour de l'axe de rotation en un mouvement rotatif d'un composant de sortie de boîte d'engrenages autour de l'axe de rotation, dans lequel - axialement par rapport à l'axe de rotation - la carte de circuit imprimé de moteur (123) et le stator sont agencés d'un côté de la boîte d'engrenages (113), appelé côté entrée de boîte d'engrenages, et le composant de sortie de boîte d'engrenages engage la boîte d'engrenages (113) depuis l'autre côté de la boîte d'engrenages (113), appelé côté sortie de boîte d'engrenages, et
• un encodeur rotatif (68-70) configuré pour détecter une rotation du composant de sortie de boîte d'engrenages autour de l'axe de rotation, dans lequel
• le module de pilotage comprend une pièce de liaison (115) qui s'étend du côté sortie de boîte d'engrenages vers le côté entrée de boîte d'engrenages et est configurée pour reprendre la rotation du composant de sortie de boîte d'engrenages de manière rigide, assurant ainsi une rotation de la pièce de liaison (115) se conformant à la rotation du composant de sortie de boîte d'engrenages, et
• l'encodeur rotatif est agencé du côté entrée de boîte d'engrenages et est configuré pour assurer une mesure d'une rotation de la pièce de liaison (115) autour de l'axe de rotation.

6. Robot humanoïde (1) selon l'une quelconque des revendications précédentes, dans lequel au moins l'un des bras (4), en particulier au niveau d'une extrémité distale éloignée d'un point de fixation du bras (4), comprend un agencement de capteur de sondage, comprenant notamment un capteur optique (21) configuré pour fournir des données de capteur optique et/ou un capteur tactile (22) configuré pour assurer un balayage tactile.

7. Robot humanoïde (1) selon l'une quelconque des revendications précédentes, dans lequel le robot (1) comprend une unité lidar de balayage (23) agencée dans une partie supérieure du robot (1) et configurée pour assurer - pendant un mouvement du robot (1) sur le sol
- un mouvement de balayage d'un faisceau de mesure laser par rapport à deux axes de rotation, et, sur cette base, générer des données de détection de lumière et de télémétrie pour générer un nuage de points tridimensionnel,
en particulier dans lequel l'unité lidar (23) est située dans la tête (5), dans lequel la tête (5) comprend un côté haut (14) opposé à un point de fixation (15) de la tête (5) au corps principal (2), un côté avant (16) adjacent au côté haut (14) et un côté arrière (17) opposé au côté avant (16) et adjacent au côté haut (14), et deux côtés transversaux opposés (18, 19) respectivement adjacents au côté haut (14) et aux côtés avant (16) et arrière (17), dans lequel l'un des deux axes de rotation de l'unité lidar (23) passe par le côté avant (16) et le côté arrière (17) et l'unité lidar (23) est configurée pour fournir - avec le côté avant (16) orienté dans le sens de marche lors d'une locomotion vers l'avant - un champ de vision regardant vers l'avant autour de l'un des deux axes de rotation.

8. Robot humanoïde (1) selon l'une quelconque des revendications précédentes, dans lequel le robot (1) comprend une unité ToF (26) agencée dans une partie supérieure du robot (1) et comprenant un agencement de capteurs à temps de vol, et configurée pour fournir - lors du mouvement du robot (1) sur le sol - des données d'imagerie 3D de l'environnement pour générer un modèle 3D de l'environnement,
en particulier dans lequel l'unité ToF (26) est située dans la tête (5) et la tête (5) comprend un côté haut (14) opposé à un point de fixation (15) de la tête (5) au corps principal (2), un côté avant (16) adjacent au côté haut (14) et un côté arrière (17) opposé au côté avant (16) et adjacent au côté haut (14), et deux côtés transversaux opposés (18, 19) respectivement adjacents au côté haut (14) et aux côtés avant (16) et arrière (17), dans lequel l'unité ToF (26) est agencée pour fournir - avec le côté avant (16) orienté dans le sens de marche pendant la locomotion - un champ de vision regardant vers l'avant.

9. Robot humanoïde (1) selon l'une quelconque des revendications précédentes, dans lequel la tête (5) comprend un côté haut (14) opposé à un point de fixation (15) de la tête (5) au corps principal (2), un côté avant (16) adjacent au côté haut (14) et un côté arrière (17) opposé au côté avant (16) et adjacent au côté haut (14), ainsi que deux côtés transversaux opposés (18, 19) respectivement adjacents au côté haut (14) et aux côtés avant (16) et arrière (17), dans lequel chacun des côtés transversaux (18, 19) comprend une caméra d'imagerie (27) de telle sorte que les deux caméras d'imagerie (27) soient agencées opposées l'une à l'autre et offrent des champs de vision opposés, en particulier dans lequel chacune des deux caméras (27) offre un champ de vision à 360° totalement sphérique.

10. Robot humanoïde (1) selon l'une quelconque des revendications précédentes, dans lequel le corps principal (2) comprend un scanner de lumière structurée (28) configuré pour fournir - pendant un mouvement du robot (1) sur le sol - un balayage 3D de l'environnement afin de générer un modèle 3D de l'environnement.

11. Robot humanoïde (1) selon l'une quelconque des revendications précédentes, dans lequel le robot (1) comprend une unité de localisation et de cartographie simultanées, unité SLAM, configurée pour effectuer un processus de localisation et de cartographie simultanées, désigné par « processus SLAM », dans lequel le processus SLAM comprend la réception de données de perception fournissant une représentation des alentours du robot (1) à une position courante, l'utilisation des données de perception pour générer une carte d'un environnement, et la localisation du robot (1) au sein de la carte de l'environnement,
en particulier dans lequel le robot (1) est en outre configuré pour
• accéder à des informations concernant des emplacements de stations de recharge et/ou de remplacement de batterie au sein de la carte de l'environnement, en particulier des informations concernant la disponibilité de positions de recharge et/ou de batteries de remplacement dans chacune des stations,
• se localiser par rapport à un emplacement d'au moins une station de recharge et/ou de remplacement de batterie au sein de la carte de l'environnement et fournir une appréciation concernant l'accessibilité de l'au moins une station de recharge et/ou de remplacement de batterie d'après un état de charge des batteries interchangeables, et
• déclencher un mouvement vers ladite au moins une station de recharge et/ou de remplacement de batterie en fonction de l'accessibilité de la station, en particulier dans lequel l'accessibilité est inférieure à un seuil de portée.

12. Robot humanoïde (1) selon l'une quelconque des revendications précédentes, dans lequel le robot (1) comprend un élément de recharge, en particulier un connecteur filaire, dans lequel l'élément de recharge est configuré pour fournir de l'énergie électrique pendant le remplacement de batterie, en particulier dans lequel le robot (1) est configuré pour connecter de manière autonome l'élément de recharge à une position de recharge pendant le remplacement de batterie.

13. Robot humanoïde (1) selon l'une quelconque des revendications précédentes, dans lequel le robot (1) comprend une batterie de secours configurée pour fournir de l'énergie électrique pendant le remplacement de batterie.

14. Robot humanoïde (1) selon l'une quelconque des revendications précédentes, dans lequel chacune des jambes (3) comprend une pluralité de roues (10) destinées à venir au contact du sol afin d'assurer la locomotion,
en particulier dans lequel chacune des jambes (3) comprend un agencement à trois roues (43) qui comprend
• trois roues fixées à un châssis de roue (44) configuré pour supporter les trois roues selon un motif circulaire,
• un axe principal (42) reliant le châssis de roue (44) au reste de la jambe (3) et assurant un degré de liberté en rotation du châssis de roue (44), et
• trois axes de roue (45) qui sont différents de l'axe principal (42), dans lequel les axes de roue (45) relient les roues au châssis de roue (44),
dans lequel chacun des axes de roue (45) offre un degré de liberté en rotation de roue indépendamment du degré de liberté en rotation de l'axe principal (42) et des degrés de liberté en rotation des deux autres axes de roue (45).

15. Robot humanoïde (1) selon l'une quelconque des revendications précédentes, dans lequel le robot (1) est configuré pour assurer un contrôle de mouvement auto-équilibré pour un mouvement des bras (4) pendant la locomotion, ce qui assure au robot (1) de rester en équilibre dans une position droite définie, pour laquelle le robot (1) comprend un capteur inertiel (38), en particulier un capteur d'inclinaison, et un capteur gyroscopique et un algorithme de commande configurés pour ajuster automatiquement la pose relative des deux bras (4) à actionnement mécanique d'après le capteur inertiel (38) et le capteur gyroscopique.
